# EUROPÄISCHE PATENTSCHRIFT

(11) **EP 2 943 375 B1**
(45) Veröffentlichungstag und Bekanntmachung des Hinweises auf die Patenterteilung: **19.06.2019**
(21) Anmeldenummer: 14700581.3
(22) Anmeldetag: 10.01.2014
(51) Int. Cl.: B60R 9/045, B60R 9/05, B60R 9/055, A45C 7/00, B62K 27/00

(54) **DACHBOXSYSTEM FÜR KRAFTFAHRZEUGE UND KOFFER FÜR EIN DACHBOXSYSTEM**
ROOF BOX SYSTEM FOR MOTOR VEHICLES AND CASE FOR A ROOF BOX SYSTEM
SYSTÈME DE COFFRE DE TOIT POUR VÉHICULES AUTOMOBILES, ET COFFRE POUR SYSTÈME DE COFFRE DE TOIT

(30) Priorität: 10.01.2013 DE 102013100223; 16.01.2013 DE 102013100437
(43) Veröffentlichungstag der Anmeldung: 18.11.2015
(73) Patentinhaber: SEs Solutions GmbH, 01705 Freital (DE)
(72) Erfinder: ESPIG, Serle, 20253 Hamburg (DE)
(74) Vertreter: RGTH
(86) Internationale Anmeldenummer: PCT/EP2014/050378
(87) Internationale Veröffentlichungsnummer: WO 2014/108502

(56) Entgegenhaltungen:
- WO-A2-2012/074307
- WO-A2-2012/074307
- WO-A2-2012/074307
- DE-A- 4 038 081
- DE-A1-102006 014 206
- DE-A1-102006 014 206
- FR-A1- 2 695 890
- FR-A1- 2 695 890
- US-A- 2 196 341
- US-A- 2 268 881
- US-A- 3 879 080
- US-A1- 2008 224 492
- US-A1- 2011 083 933
- US-A1- 2011 083 933
- US-A1- 2012 267 208
- US-A1- 2012 267 208

## Beschreibung

Die Erfindung betrifft ein Dachboxsystem für Kraftfahrzeuge, sowie einen Koffer für ein Dachboxsystem.

### Stand der Technik

Bekannte Dachboxen sind geschlossene bzw. verschließbare Behälter zur Lagerung von Gepäck, die den zusätzlichen Transport von Gepäck, beispielsweise einer Skiausrüstung, mit einem Kraftfahrzeug, außerhalb der üblichen Stauräume, wie Kofferraum, ermöglichen. Sie werden auf dem Dach des Kraftfahrzeugs montiert, in der Regel an einer Dachreling oder an dafür vom Hersteller vorgesehenen Dachschienen. Eine Dachbox erhöht den Kraftstoffverbrauch des Kraftfahrzeugs, da sie das Gewicht und den Luftwiderstand des Kraftfahrzeugs vergrößert. Zusätzlich werden die Fahrgeräusche verstärkt und die erreichbare bzw. zulässige Höchstgeschwindigkeit des Fahrzeugs reduziert. Wird der zusätzliche Gepäckraum der Dachbox nicht benötigt, muss diese deshalb demontiert und anderweitig gelagert werden. Für die Lagerung der Dachbox besteht ein erheblicher Platzbedarf, was insbesondere dann nachteilig ist, wenn keine geeignete Garage oder ein Abstellraum zur Verfügung steht.

Aus der DE 60 2005 002 301 T2 ist ein Fahrzeugdachkarosserieteil eines Kraftfahrzeuges bekannt, das als Behälter ausgebildet ist, der einen Stauraum begrenzt, wobei dieser Behälter mit einer von außerhalb des Kraftfahrzeugs zugänglichen Klappe ausgerüstet ist. Dieser Behälter ist somit in das Dach des Kraftfahrzeuges integriert ausgebildet und muss nicht montiert und demontiert werden. Auch werden hierdurch der Kraftstoffverbrauch sowie die Fahrgeräusche reduziert. Nachteilig ist jedoch, dass der Behälter nur einen äußerst begrenzten Stauraum zur Verfügung stellt, da die Höhe des Behälters auf die Dicke des Kraftfahrzeugdaches beschränkt ist.

Aus der WO 2012/074307 A2 ist ein Dachgepäckträger bekannt, in welchem eine sackartige Tasche angeordnet ist, die zusammenfaltbar und auseinanderfaltbar ist.

In der US 2008/0224492 A1 wird ein in ein Fahrzeugdach integrierter Gepäckträger beschrieben, der von einer verstauten Position innerhalb des Fahrzeugdachs in eine nutzbare Position bringbar ist.

Die DE 10 2006 014 206 A1 betrifft ein Fahrzeugdach mit wenigstens einer in einem mittleren Bereich des Daches angeordneten Dachkonsole, auf deren Außenseite ein Gepäckraum angeordnet ist, dessen obere Deckfläche von einer flachen, abgesenkten Stellung in eine angehobene Betriebsstellung bewegbar ist.

Die FR 2 695 890 A1 beschreibt einen Fahrzeugdachträger mit vorne und hinten angeordneten, aerodynamischen Spoilern, die am Fahrzeugdach befestigbar sind. Die beiden Spoiler sind miteinander über einen zentralen Holm verbunden.

Die US 2012/0267208 A1 beschreibt ein Taschensystem mit Rollen und einem Handgriff an einem Ende und einem Rollensystem an dem anderen Ende.

Die US 2011/0083933 A1 beschreibt eine Reisetasche mit einer Rückwand und einer faltbaren Endwand.

Die US 3,879,080 A zeigt ein ein wasserdichtes Teil zur Stützung einer Heckklappen-Öffnung einer Fließhecklimousine in einer Stellung entfernt von der Öffnung.

Die US 2,268,881 A beschreibt eine Gepäckträgervorrichtung für Automobile umfassend eine Umhüllung aus einem flexiblen, wasserfesten Material.

Die US 2,196,341 A beschreibt ein Behältnis für Kleidung geeignet um auf dem Dach eines Automobiles benutzt zu werden.

### Darstellung der Erfindung: Aufgabe, Lösung, Vorteile

Der Erfindung liegt die Aufgabe zugrunde ein in ein Dach eines Kraftfahrzeugs integriertes Dachboxsystem bereitzustellen, welches einfach und vielseitig zu handhaben ist, und welches eine aerodynamisch vorteilhafte Form aufweist.

Diese Aufgabe wird durch ein Dachboxsystem für Kraftfahrzeuge mit den Merkmalen des Anspruchs 1 und durch einen Einsatzkörper mit den Merkmalen des Anspruchs 15 gelöst.

Das erfindungsgemäße Dachboxsystem für Kraftfahrzeuge umfasst ein Dach eines Kraftfahrzeuges, welches mindestens ein an einem Dachgrundelement angeordnetes Deckenelement aufweist, und einen Einsatzkörper mit mindestens einer Außenwand, wobei das mindestens eine Deckenelement unter Ausbildung eines zur Aufnahme des Einsatzkörpers geeigneten Zwischenraumes zwischen dem mindestens einen Deckenelement und dem Dachgrundelement von einem Grundzustand in einen Aufnahmezustand verfahrbar ist, und wobei im Aufnahmezustand der Einsatzkörper in dem Zwischenraum anordbar ist, derart dass die mindestens eine Außenwand des Einsatzkörpers eine Außenfläche des Dachboxsystems bildet.

Vorteilhaft an dem erfindungsgemäßen Dachboxsystem für Kraftfahrzeuge ist, dass die Handhabung vereinfacht wird, da aufgrund der integrierten Anordnung des Dachboxsystems in einem Dach eines Kraftfahrzeuges eine zusätzliche Montage von Haltevorrichtungen, wie zum Beispiel von einem Dachgepäckträger, durch den Benutzer nicht mehr durchgeführt werden muss. Ein weiterer Vorteil der integrierten Bauweise ist, dass das Dachboxsystem im Grundzustand derart in das Dach des Kraftfahrzeuges integriert ist, dass keine Erhöhung des Luftwiderstandsbeiwertes des Kraftfahrzeuges auftritt. In besonders vorteilhafter Weise lässt sich durch Verfahren des mindestens einen Deckenelementes ein Zwischenraum zwischen dem Deckenelement und dem Dachgrundelement herstellen, in den in einfacher Art und Weise ein Einsatzkörper anordbar ist. Da der im Zwischenraum angeordnete Einsatzkörper mit mindestens einer Außenwand eine Außenfläche des Dachboxsystems bildet, muss diese Außenfläche nicht als zusätzliches Element in das Dach des Kraftfahrzeuges integriert werden. Es ergibt sich durch die verringerte Anzahl von im Dach integrierten Elementen eine vereinfachte und mechanisch stabilere Dachboxkonstruktion.

Der Einsatzkörper umfasst einen, bevorzugt geschlossenen oder verschließbaren, Aufnahmeraum, welcher zur Aufnahme von Transportgut, wie zum Beispiel Gepäck oder Taschen, geeignet ist. Somit kann durch Aufnahme von Transportgut, beispielsweise von Gepäck, in den Aufnahmeraum des Einsatzkörpers und durch Anordnung des Einsatzkörpers in den Zwischenraum zwischen dem mindestens einen Deckenelement und dem Dachgrundelement ein Dachboxsystem für ein Kraftfahrzeug bereitgestellt werden, mit dem Gepäck mit dem Kraftfahrzeug transportiert werden kann.

Vorteilhafte Ausgestaltungen des erfindungsgemäßen Dachboxsystems sind in den Unteransprüchen gekennzeichnet.

Bevorzugt weist der Einsatzkörper eine Klappe oder einen Deckel auf, welche sich öffnen und schließen lässt, wobei im geöffneten Zustand der Klappe oder des Deckels der Aufnahmeraum für einen Benutzer zum Befüllen des Aufnahmeraumes zugänglich wird. Insbesondere bevorzugt ist im geschlossenen Zustand der Klappe oder des Deckels der Aufnahmeraum des Einsatzkörpers spritzwasserdicht abgeschlossen.

In einer vorteilhaften Ausführungsform ist das Deckenelement in vertikaler Richtung gesehen oberhalb des Dachgrundelementes angeordnet. Weiter umfasst das Dachgrundelement im Wesentlichen die Unterseite des Daches des Kraftfahrzeuges, welche der Fahrgastzelle des Kraftfahrzeuges zugewandt ist. In dieser Anordnung wird vorteilhafterweise bei Verfahren des Deckenelementes von dem Grundzustand in den Aufnahmezustand der den Passagieren zur Verfügung stehende Raum der Fahrgastzelle nicht verkleinert.

In einer weiteren zweckmäßigen Ausgestaltung ist das Deckenelement an dem Dachgrundelement schwenkbar angeordnet. Insbesondere ist das Deckenelement an dem Dachgrundelement um eine Achse, bevorzugt um eine horizontale Achse, besonders bevorzugt um eine senkrecht zur Fahrtrichtung eines Kraftfahrzeuges angeordnete horizontale Achse, schwenkbar angeordnet. Dabei ist bevorzugt die Achse im in Fahrtrichtung des Kraftfahrzeuges gesehen vorderen Teil des Dachgrundelementes angeordnet. Durch Anordnung der Achse im vorderen Teil des Dachgrundelementes wird beim Verschwenken des Deckenelementes der Luftwiderstandsbeiwert des Fahrzeugdaches nur gering erhöht, da ein im Fahrzustand des Kraftfahrzeuges auftretender Fahrtwind das ausgestellte, beziehungsweise in den Aufnahmezustand verfahrene, Deckenelement in aerodynamisch günstiger Weise anströmen und umströmen kann.

Eine weiter bevorzugte Ausführungsform des Dachboxsystems ist dadurch gekennzeichnet, dass das Dachboxsystem Verformungsmittel zur reversiblen Formänderung des mindestens einen Deckenelementes oder eines Teilbereiches des mindestens einen Deckenelementes von einem ersten Verformungszustand, welcher dem Grundzustand des mindestens einen Deckenelementes entspricht, in einen zweiten Verformungszustand, welcher dem Aufnahmezustand des mindestens einen Deckenelementes entspricht, aufweist, wobei eine Aktivierungseinrichtung zur Aktivierung der Verformungsmittel vorgesehen ist. Dabei kann vorgesehen sein, dass die Verformung des mindestens einen Deckenelementes beziehungsweise des Teilbereiches des mindestens einen Deckenelementes eine Verbiegung des mindestens einen Deckelementes beziehungsweise des Teilbereichs des mindestens einen Deckenelementes umfasst, wobei im mindestens einen Deckenelement beziehungsweise im Teilbereich des mindestens einen Deckenelementes Soll-Biegestellen oder Soll-Biegelinien vorgesehen sind, um die herum die Verbiegung erfolgt. Dabei können die Verformungsmittel eines oder mehrere Piezo-Elemente umfassen, welche bevorzugt in das mindestens eine Deckenelement integriert angeordnet sind. Weiter können die Verformungsmittel elektrische Kontakte oder mechanische Verformungsmittel, wie eine Teleskopstange oder verschwenkbare Gestänge aufweisen.

Dabei ergibt sich eine besonders zweckmäßige Ausführungsform, wenn das mindestens eine Deckenelement oder der Teilbereich des mindestens einen Deckenelements Formgedächtnis-Material, wie Formgedächtnis-Legierungen oder Formgedächtnis-Polymere umfasst. Ebenso kann das mindestens eine Deckenelement oder der Teilbereich des mindestens einen Deckenelementes aus dehnbarem Material bestehen, und die Verformungsmittel können so ausgebildet sein, dass diese das mindestens eine Deckenelement oder den Teilbereich des mindestens einen Deckenelements von einem ungedehnten Zustand in einen gedehnten Zustand und umgekehrt zu versetzen in der Lage sind. Durch Verwendung von Verformungsmitteln in Verbindung mit Deckenelementen oder Teilbereichen von Deckenelementen, welche aus dehnbarem Material bestehen oder welche sich durch die Verformungsmittel verbiegen lassen, ist das Dachboxsystem in besonders vorteilhafter Weise vollständig in das Kraftfahrzeugdach eines Fahrzeugs integrierbar.

In einer weiter bevorzugten Ausführungsform des Dachboxsystems sind die Form des im Aufnahmezustand ausgebildeten Zwischenraumes und die Form des Einsatzkörpers im Wesentlichen zueinander komplementär. Dabei füllt der Einsatzkörper den Zwischenraum im Wesentlichen vollständig aus, sobald der Einsatzkörper in diesem angeordnet wird. Komplementär bedeutet in diesem Zusammenhang insbesondere, dass eine gedachte, den Zwischenraum umhüllende Begrenzungsfläche, welche durch die dem Dachgrundelement zugewandte Seite des Deckenelementes und die dem Deckenelement zugewandte Seite des Dachgrundelementes, sowie durch gedachte, den Zwischenraum zu einem Volumen abschließende, weitere Flächen definiert wird, und eine gedachte den Einsatzkörper einhüllende Oberfläche im Wesentlichen form- und volumengleich sind. Der Einsatzkörper ist dabei so in dem Zwischenraum anordbar, dass dieser den Zwischenraum im Wesentlichen bzw. vollständig ausfüllt. Dabei kann es jedoch zweckmäßig sein, dass der Einsatzkörper besonders unzugängliche Teile des Zwischenraumes nicht ausfüllt. Aufgrund der Komplementarität des Einsatzkörpers und des Zwischenraumes kann vorteilhafterweise ein Großteil des Zwischenraumes genutzt werden.

In einer weiteren vorteilhaften Ausführungsform ist der im Aufnahmezustand ausgebildete Zwischenraum im Wesentlichen keilförmig, das heißt, dass der Zwischenraum in Fahrtrichtung des Kraftfahrzeuges gesehen, nach vorne eine in der Höhe abnehmende Form aufweist. Entsprechend ist es besonders vorteilhaft, dass der Einsatzkörper eine dazu komplementäre und im Wesentlichen auch keilförmige Form aufweist, sodass der Einsatzkörper bündig in den Zwischenraum einsetzbar ist. Durch die im Aufnahmezustand nach vorne zulaufende Keilform ergibt sich eine besonders vorteilhafte Aerodynamik des Kraftfahrzeugdaches, welche sich auch positiv auf den Kraftstoffverbrauch auswirkt.

Eine weiter zweckmäßige Ausgestaltung des Dachboxsystems ergibt sich, wenn der Einsatzkörper mindestens drei Außenwände umfasst, welche bei im Aufnahmezustand im Zwischenraum angeordneten Einsatzkörper drei Außenflächen, insbesondere zwei Seitenflächen und eine Rückfläche des Dachboxsystems bilden. Dabei kann besonders vorteilhaft der Einsatzkörper keilförmig ausgebildet sein. Ist der Einsatzkörper im Zwischenraum angeordnet, so liegen zwei der fünf Außenwände des keilförmigen Einsatzkörpers je am Deckenelement oder an dem Dachgrundelement an, während die verbliebenen drei Außenwände des Einsatzkörpers zwei Außenflächen und ein Rückfläche des Dachboxsystems bilden. Jedoch können prinzipiell auch Seitenwandungen bereits im Bereich zwischen Dachgrundelement und Deckenelement vorgesehen sein, wobei bevorzugt die Seitenwandungen in das Dach des Kraftfahrzeuges integriert beziehungsweise an diesem angeordnet sind, so dass diese Seitenwandungen im Aufnahmezustand zwei Außenflächen des Dachboxsystems bilden, und wobei eine Außenwand des Einsatzkörpers die Rückfläche des Dachboxsystems bildet. Es ist auch möglich, dass die Seitenwandungen im Aufnahmezustand eine Außenfläche und die Rückfläche des Dachboxsystems bilden, und dass eine Außenwand des Einsatzkörpers eine weitere Außenfläche des Dachboxsystems bildet. Die Seitenwandungen im Bereich zwischen Dachgrundelement und Deckenelement können als Stoffbahnen, oder als Elemente aus Metall oder Kunststoff ausgebildet sein, welche im Grundzustand insbesondere zwischen Dachgrundelement und Deckenelement angeordnet sind. Jedoch kann auch das mindestens eine Deckenelement bzw. ein Teilbereich des mindestens einen Deckenelements die Seitenwandungen umfassen. Diese Anordnung ist insbesondere dann vorteilhaft, wenn das mindestens eine Deckenelement oder ein Teilbereich des mindestens einen Deckenelementes von einem ersten Verformungszustand, welcher dem Grundzustand des mindestens einen Deckenelementes entspricht, in einen zweiten Verformungszustand, welcher dem Aufnahmezustand des mindestens einen Deckenelementes entspricht, verformbar ist.

Besonders vorteilhaft ist es, wenn das mindestens eine Deckenelement und der im Aufnahmezustand in dem Zwischenraum angeordnete Einsatzkörper eine an dem Dachgrundkörper angeordnete, im Wesentlichen geschlossene, aerodynamisch vorteilhafte Form bilden. Dabei ist es besonders vorteilhaft, wenn diese Form insbesondere in dem Übergangsbereich von dem mindestens einen Deckenelement und dem Einsatzkörper lediglich geringe Spaltmaße aufweist. Dadurch wird vorteilhafterweise erreicht, dass im Fahrbetrieb des Kraftfahrzeugs nur geringe Luftverwirbelungen in den Übergangsbereichen von dem mindestens einen Deckenelement und dem Einsatzkörper erzielt werden.

In einer weiter bevorzugten Ausführungsform weist das Dachboxsystem ein erstes Führungsmittel, insbesondere Führungsschienen oder Führungsleisten am mindestens einen Deckenelement, insbesondere an der Innenseite des mindestens einen Deckenelementes, und/oder am Dachgrundelement auf. Weiter bevorzugt weist der Einsatzkörper ein zweites Führungsmittel auf, welches mit dem ersten Führungsmittel wirkverbindbar ist, und wobei das zweite Führungsmittel insbesondere Rollen, Leisten oder Stifte umfasst. Dabei ist es von besonderem Vorteil, wenn der Einsatzkörper durch das Zusammenwirken von erstem und zweitem Führungsmittel in besonders einfacher Handhabung in den Zwischenraum zwischen Dachgrundelement und Deckenelement eingeführt werden kann. Zweckmäßigerweise werden zum Einführen des Einsatzkörpers in den Zwischenraum das zweite Führungsmittel insbesondere die Rollen, Leisten oder Stifte in Wirkverbindung mit dem ersten Führungsmittel, insbesondere mit den Führungsschienen oder Führungsleisten gebracht. Die miteinander wirkverbundenen ersten und zweiten Führungsmittel, also beispielsweise die mit Führungsschienen verbundenen Rollen, Leisten oder Stifte, bewirken dann eine wiederholbare und positionsgenaue Führung des Einsatzkörpers in den Zwischenraum.

Mit weiterem Vorteil weist das Dachboxsystem Arretierungsmittel auf. Dabei kann der in den Zwischenraum eingeführte Einsatzkörper mittels der Arretierungsmittel im Zwischenraum in einer Transportposition fixiert werden, sodass der Einsatzkörper sicher mit dem Kraftfahrzeug mitgeführt werden kann. Die Arretierungsmittel können dabei am Dach des Kraftfahrzeuges, insbesondere am Dachgrundelement und/oder am mindesten einen Deckenelement, angeordnet sein. Jedoch ist auch eine Ausführungsform denkbar, bei der Arretierungsmittel am Einsatzkörper angeordnet sind.

In einer weiter vorteilhaften Ausführungsform ist das erste oder zweite Führungsmittel motorangetrieben. Mit dem motorangetriebenen Führungsmittel kann somit der Einsatzkörper ohne Kraftaufwand seitens des Benutzers in den Zwischenraum eingeführt und wieder herausgefahren werden.

Eine besonders zweckmäßige Ausführungsform des Dachboxsystems umfasst dabei einen Einsatzkörper, welcher als Koffer, insbesondere als Hartschalenkoffer, Rollkoffer oder Trolley ausgebildet ist, oder der Einsatzkörper ist als zusammenlegbarer Kinderwagen oder Fahrradanhänger ausgebildet. In dieser Ausführungsform dient der Einsatzkörper nicht nur als Aufnahmekörper für das Dachboxsystem, sondern kann auch unabhängig von der Anordnung im Zwischenraum als Transport- oder Tragemittel benutzt werden. Dabei ist der als Koffer, Hartschalenkoffer, Rollkoffer oder Trolley ausgebildete Einsatzkörper beziehungsweise der als Kinderwagen oder Fahrradanhänger ausgebildete Einsatzkörper so konstruiert, dass dieser in einen Zustand bringbar ist, in welchem der Einsatzkörper im Wesentlichen komplementär zu dem im Aufnahmezustand gebildeten Zwischenraum ist.

Erfindungsgemäß umfasst der Einsatzkörper, insbesondere der als Hartschalenkoffer, Rollkoffer, Trolley, Kinderwagen- oder Fahrradanhänger ausgebildete Einsatzkörper, Rollen, wobei die Rollen in den Einsatzkörper versenkbar und/oder umklappbar ausgebildet sind, derart, dass die versenkten oder umgeklappten Rollen nicht vom Einsatzkörper hervorstehen. So kann der Einsatzkörper mit seinen Rollen in einfacher Weise fortbewegt, beispielsweise gezogen oder geschoben werden. Zur Anordnung des Einsatzkörpers, beispielsweise des Hartschalenkoffers, Rollkoffers, Trolleys oder Kinderwagens, werden bevorzugt die Rollen versenkt oder eingeklappt, sodass diese nicht vom Einsatzkörper hervorstehen und in abträglicher Art und Weise das Einführen des Einsatzkörpers in den Zwischenraum beeinträchtigen. Die Rollen können auch automatisch oder manuell versenkbar sein. So ist es insbesondere denkbar, dass durch Einrasten des Einsatzkörpers beziehungsweise des Koffers in den Zwischenraum die Rollen versenkt oder ausgefahren werden.

Vorteilhafterweise kann der als Rollkoffer ausgebildete Einsatzkörper auch mit einem Ziehbügel ausgestattet sein. Der Ziehbügel kann dabei mit einem Auslösemechanismus verbunden sein. So ist es möglich, dass bei Einfahren des Ziehbügels der Auslösemechanismus bedient wird und die Rollen automatisch versenkt werden.

In einer besonders bevorzugten Ausführungsform des Dachboxsystems weist das Dachgrundelement eine Öffnung, insbesondere eine Öffnung für ein Sonnendach auf. Zusätzlich weist das mindestens eine Deckenelement eine der Form der Öffnung oder der Form des Sonnendaches entsprechende Komplementäröffnung auf, wobei die Komplementäröffnung im Wesentlichen in vertikaler Richtung gesehen oberhalb der Öffnung im Dachgrundelement angeordnet ist, derart dass im Grundzustand des mindestens einen Deckenelementes die Komplementäröffnung des mindestens einen Deckenelementes im Wesentlichen deckungsgleich auf der Öffnung des Dachgrundelementes angeordnet ist. Dabei kann in der Öffnung des Dachgrundelementes ein Sonnendach angeordnet sein. Im Grundzustand des Dachboxsystems kommt die Komplementäröffnung des Deckenelementes deckungsgleich auf der Öffnung des Dachgrundelementes, also auf dem Sonnendach zu liegen. Es kann somit durch die Komplementäröffnung ermöglicht werden, dass Licht von außen durch das Sonnendach in den Innenraum der Fahrgastzelle gelangt. Weiter kann durch Öffnen und Schließen des Sonnendaches Luft aus der Fahrgastzelle ein- und/oder austreten, wobei die Luft aus der Fahrgastzelle durch das Sonnendach und durch die Komplementäröffnung in die Außenumgebung gelangt und umgekehrt.

Zweckmäßig kann im Dachgrundelement ein Sonnendach oder ein Faltdach angeordnet sein, wobei die Führungsvorrichtungen des Sonnendaches oder des Faltdaches das erste Führungsmittel des Dachboxsystems umfassen oder darstellen können.

Ganz besonders bevorzugt weist der Einsatzkörper ein der Form der Komplementäröffnung des mindestens einen Deckenelementes entsprechendes Verschlußelement auf. Dieses Verschlußelement kann dabei insbesondere schildförmig ausgeformt sein. Dabei ist es zweckmäßig, dass das Verschlußelement bei im Aufnahmezustand im Zwischenraum angeordnetem Einsatzkörper in die Komplementäröffnung des mindestens einen Deckenelementes formgenau einpasst. Durch das formgenaue Einpassen des insbesondere schildförmigen Verschlußelementes des Einsatzkörpers kann die Komplementäröffnung des Deckenelementes im Aufnahmezustand plan und bündig verschlossen werden, wenn der Einsatzkörper in den Zwischenraum eingesetzt ist.

Weiter kann bevorzugt das Verschlußelement, beziehungsweise das schildförmige Verschlußelement, des Einsatzkörpers aus Metall oder Kunststoff bestehen und insbesondere in Wagenfarbe beziehungsweise in der Farbe des Deckenelementes lackiert sein. Auch kann mindestens eine Außenwand des Einsatzkörpers bevorzugt in Wagenfarbe lackiert sein.

Eine weitere besonders bevorzugte Ausgestaltungsform des Dachboxsystems ergibt sich dadurch, dass das Dach des Dachboxsystems als Cabriodach, insbesondere als ein unter einer Kofferraumabdeckung versenkbares Cabriodach ausgebildet ist.

In einer weiteren zweckmäßigen Weiterbildung des Dachboxsystems ist das Dach des Dachboxsystems als Cabriodach ausgebildet, wobei das Dachgrundelement des Dachs eine erste Lage Verdeckmaterial aufweist und wobei bevorzugt das mindestens eine Deckenelement eine zweite Lage Verdeckmaterial aufweist.

Die erste Lage Verdeckmaterial und/oder die zweite Lage Verdeckmaterial können dabei aus jedem für ein Cabriodach geeignetem Material bestehen. Somit umfasst der Begriff Verdeckmaterial gewebte, imprägnierte Stoffe, aber auch Kunststoffe und/oder Metallbleche, welche insbesondere für sogenannte "Hard-top"-Cabriodächer geeignet sind. Ferner können die erste und/oder die zweite Lage Verdeckmaterial auch mittels Verstärkungselementen verstärkt sein. Unter dem Begriff Lage werden im Rahmen dieser Anmeldung auch die Begriffe Wandung, Folie, Platte und Stoffbahn verstanden. Ferner können die Lagen formsteif und/oder biegbar ausgebildet sein.

Das mindestens eine, eine zweite Lage Verdeckmaterial umfassende Deckenelement ist vorteilhafterweise unter Ausbildung eines zur Aufnahme des Einsatzkörpers geeigneten Zwischenraumes zwischen dem mindestens einen Deckenelement und dem eine erste Lage Verdeckmaterial aufweisenden Dachgrundelement von dem Grundzustand in den Aufnahmezustand verfahrbar. Somit kann im Aufnahmezustand der Einsatzkörper in dem Zwischenraum derart angeordnet werden, dass die mindestens eine Außenwand des Einsatzkörpers eine Außenfläche des Dachboxsystems bildet. Es ergibt sich der Vorteil, dass das Dachboxsystem in der zweckmäßigen Weiterbildung auch für den Einsatz in als Cabrio ausgebildeten Kraftfahrzeugen geeignet ist. Im Gegensatz zu herkömmlichen, bekannten Dachboxsystemen, bei welchen eine Dachbox in der Regel an einer Dachreling oder an dafür vom Hersteller vorgesehenen Dachschienen befestigt wird und welche daher nicht für Cabrios geeignet sind, wird somit ein auch für ein Cabriodach oder für ein Cabrioverdeck geeignetes Dachboxsystem bereitgestellt.

In vorteilhafter Weise kann das Deckenelement einen Rahmen aufweisen, auf welchem bevorzugt die zweite Lage Verdeckmaterial, welche auch als Außenlage bezeichnet wird, aufgespannt ist oder an welchem die Außenlage befestigtbar ist. Dabei ist bevorzugt der Rahmen derart am Deckenelement angeordnet, dass das Deckenelement an dem Dachgrundelement schwenkbar angeordnet ist. Ist das Deckenelement umfassend Rahmen um eine horizontale Achse senkrecht zur Fahrtrichtung des Kraftfahrzeuges schwenkbar angeordnet, so ist bevorzugt zur Herstellung der Schwenkverbindung ein Scharnier im Bereich der horizontalen Achse vorgesehen. Im Aufnahmezustand, welcher durch Verfahren des mindestens einen Deckenelementes gegenüber dem die erste Lage Verdeckmaterial aufweisenden Dachgrundelement eingenommen wird, ist somit in der Ausführungsform das Dachboxsystem bereits ohne Anordnung des Einsatzkörpers im Zwischenraum zwischen Deckenelement und Dachgrundelement aufgrund der aussteifenden Wirkung des Rahmens im Wesentlichen formstabil. Durch Einsetzen des Einsatzkörpers in den Zwischenraum kann das Dachboxsystem weiter ausgesteift werden. Ferner kann der Rahmen so ausgebildet und/oder am Deckenelement angeordnet sein, dass dieser einen vorhandenen Faltmechanismus des Cabriodaches nicht behindert.

Alternativ kann das mindestens eine Deckenelement auch ohne einen Rahmen ausgebildet sein, so dass das Deckenelement im Wesentlichen ausschließlich die zweite Lage Verdeckmaterial beziehungsweise die Außenlage umfasst. In der alternativen Ausgestaltung kann das in den Aufnahmezustand verfahrene Deckenelement bevorzugt durch Einsetzen des Einsatzkörpers in den Zwischenraum ausgesteift beziehungsweise versteift oder stabilisiert werden, oder die erste Lage Verdeckmaterial und/oder die zweite Lage Verdeckmaterial besitzen auch ohne Rahmen eine ausreichende Steifigkeit. Dies ist insbesondere bei "Hard-top"-Cabriodächern der Fall. Bevorzugt bildet mindestens eine Außenwand des Einsatzkörpers eine Außenfläche des Dachboxsystems. Es können aber auch alle Außenflächen durch Elemente beziehungsweise Bestandteile des Cabriodaches realisiert werden.

In einer bevorzugten Ausgestaltungsform des Dachboxsystems sind Seitenwandungen im Bereich zwischen dem Dachgrundelement und dem mindestens einen Deckenelement vorgesehen, wobei bevorzugt die Seitenwandungen im Aufnahmezustand zwei Außenflächen des Dachboxsystemen bilden, und wobei eine Außenwand des Einsatzkörpers die Rückfläche des Dachboxsystems bildet. Jedoch können die Seitenwandungen auch eine Außenfläche und die Rückfläche des Dachboxsystems bilden und die Außenwand des Einsatzkörpers bildet eine weitere Außenfläche des Dachboxsystems.

Ist das Dach des Dachboxsystems als Cabriodach ausgebildet, so kann auch das mindestens eine Deckenelement bzw. ein Teilbereich des mindestens einen Deckenelementes die Seitenwandungen umfassen. Besonders bevorzugt ist ein Teilbereich der zweiten Lage Verdeckmaterial beziehungsweise der Außenlage als Seitenwandung ausgebildet. Ferner kann auch das Dachgrundelement bzw. ein Teilbereich des Dachgrundelementes die Seitenwandungen umfassen. Bei der bevorzugten Ausgestaltung sind die Seitenwandungen und/oder ein die Seitenwandungen umfassender Teilbereich des mindestens einen Deckenelementes und/oder des Dachgrundelementes am Deckenelement und/oder am Dachgrundelement mittels Faltscharnieren verbunden. Die Verbindung kann jedoch auch durch andere Verbindungsmethoden wie Vernähen oder Kleben stattfinden.

Bevorzugt liegt im Grundzustand die zweite Lage Verdeckmaterial des mindestens einen Deckenelementes auf der ersten Lage Verdeckmaterial des Dachgrundelementes auf beziehungsweise ist in unmittelbarer Nähe der ersten Lage Verdeckmaterial des Dachgrundelementes angeordnet. Ferner können bevorzugterweise die Seitenwandungen ebenfalls aus einem Verdeckmaterial bestehen oder aufweisen. Die Seitenwandungen sind zweckmäßig über bevorzugt Faltscharniere mit dem Deckenelement und/oder dem Dachgrundelementes verbunden, wobei die Faltscharniere im Grundzustand an den Seiten des Cabriodaches, bevorzugt in etwa oberhalb der Seitenscheibe bzw. der Fahrgasttüren angeordnet sind, und weiter bevorzugt in Längsrichtung des Fahrzeuges ausgerichtet sind. Im Grundzustand können die Seitenwandungen entlang mindestens einer Faltlinie gefaltet sein und entweder zwischen dem mindestens einen Deckenelement und dem Dachgrundelement angeordnet sein oder seitwärts, in Richtung der Seitenscheiben und Fahrgasttüren, neben den übereinander liegenden oder sich in unmittelbarer Nähe befindlichen Deckenelement und Dachgrundelement liegen.

Beim Verfahren des mindestens einen Deckenelementes in den Aufnahmezustand, der durch bevorzugt vertikales Verfahren des mindestens einen Deckenelementes stattfindet, wird ein Zwischenraum zwischen den Dachgrundelement und dem mindestens einen Deckenelement bereitgestellt, in welchem der Einsatzkörper angeordnet werden kann. Dabei schwenkt das mindestens eine Deckenelement, welches die Außenlage umfasst, bevorzugt um eine horizontale Achse senkrecht zur Fahrtrichtung im vorderen Bereich des Cabriodaches. Die bevorzugt ebenfalls aus einem Verdeckmaterial bestehenden Seitenwandungen, welche im Grundzustand entweder zwischen dem Deckenelemente und dem Dachgrundelement oder außerhalb und neben dem Dachgrundelement und dem Deckenelement angeordnet sind, sind im Aufnahmezustand zwischen dem mindestens einen Deckenelement und dem Dachgrundelement verspannt und an dem Deckenelement und dem Dachgrundelement bevorzugt mittels Faltscharnieren verbunden. Während des Verfahrens vom Grundzustand in den Aufnahmezustand entfalten sich die Seitenwandungen bevorzugt entlang einer Faltlinie der Seitenwandungen und bilden im Aufnahmezustand zwei Außenflächen des Dachboxsystems. In den Zwischenraum kann der Einsatzkörper eingesetzt werden und bildet mit einer Außenwand des Einsatzkörpers bevorzugt eine Rückfläche des Dachboxsystems.

Zur Unterstützung und Erleichterung des Verfahrens zwischen Grundzustand und Aufnahmezustand können die Seitenwandungen ein flexibles, bevorzugt federndes Material umfassen, welches sich im entspannten Zustand entfaltet beziehungsweise ausstellt oder glättet. Somit haben die Seitenwandungen eine Federwirkung, welche das Verfahren des Deckenelementes von Grundzustand in den Aufnahmezustand unterstützt oder erleichtert. Gleichzeitig oder alternativ können weitere Federelemente vorgesehen sein, welche das Verfahren von dem Grundzustand in den Aufnahmezustand unterstützen. Ferner sind elektrisch angetriebener Verfahrmittel wie Aktuatoren oder Linearmotoren vorsehbar, welche auf elektronisch gesteuerte Weise das mindestens eine Deckenelement in den Aufnahmezustand verfahren.

Um ein unbeabsichtigtes Verfahren des mindestens einen Deckenelementes in den Aufnahmezustand zu verhindern, kann ein Verriegelungsmechanismus vorgesehen sein. Erst durch eine händische Betätigung und Lösen des Verriegelungsmechanismus ist das Verfahren in den Aufnahmezustand möglich. Der Verriegelungsmechanismus kann jedoch auch auf elektronische Weise oder mittels einer geeigneten Mechanik ausgelöst werden. Ferner kann zur Sicherung des mindestens einen Deckenelementes am Dachgrundelement ein Verbindungsmittel vorgesehen sein. Bevorzugt umfasst das Verbindungsmittel einen Klettverschluss und/oder einen Klebeverschluss und/oder einen Reißverschluss. Liegt im Grundzustand das mindestens eine Deckenelement auf dem Dachgrundelement auf beziehungsweise befindet sich in unmittelbarer Nähe zum Dachgrundelement, so kann das mindestens eine Deckenelement durch das Verbindungsmittel am Dachgrundelement gesichert werden, so dass ein unbeabsichtigtes Verfahren in den Aufnahmezustand verhindert wird.

Bevorzugt sind die Seitenwandungen über die Faltscharniere am mindestens einen Deckenelement und/oder am Dachgrundelement befestigt, wobei für die Befestigung die Seitenwandungen mit dem Faltscharnier und/oder mit dem Dachgrundelement und/ oder dem Deckenelement vernäht sind. Jedoch ist es auch möglich, dass die Seitenwandungen abnehmbar ausgestaltet sind und am Deckenelement und/oder am Dachgrundelement und/oder an dem Faltscharnier mittels eines Klebe- oder Reißverschluss befestigt sind. Ferner können die Seitenwandungen auch als Teilbereich des mindestens einen Deckenelementes und/oder des Dachgrundelementes einstückig mit dem Deckenelement und/oder dem Dachgrundelement ausgebildet sein.

Bevorzugterweise ist der Einsatzkörper als Koffer ausgebildet. Bevorzugt weist der Koffer eine im Wesentlichen keilförmige Form auf, und/oder ist der Koffer als Rollkoffer oder Trolley ausgebildet, und/oder weist der Koffer Rollen auf, wobei die Rollen in den Hauptkörper des Koffers versenkbar und/oder umklappbar ausgebildet sind, derart dass die versenkten oder umgeklappten Rollen bevorzugt nicht vom Hauptkörper des Koffers hervorstehen, wobei die Rollen besonders bevorzugt als zweites Führungsmittel ausgebildet sind.

In einem weiteren Aspekt der Erfindung ist ein Dachboxsystem vorgesehen, das ein Dach eines Kraftfahrzeuges mit einem Dachgrundelement und einen Einsatzkörper umfasst, wobei der Einsatzkörper von außen auf das Dachgrundelement unbeabstandet aufsetzbar und daran lösbar befestigbar ist, derart dass eine Außenwand des Einsatzkörpers im auf das Dachgrundelement aufgesetzten Zustand eine Außenfläche des Dachboxsystems bildet, dass der Einsatzkörper einen Innenraum aufweist und dass der Einsatzkörper Volumenänderungsmittel aufweist, wobei das Volumen des Innenraumes mittels der Volumenänderungsmittel veränderbar ist, wobei der Einsatzkörper mittels der Volumenänderungsmittel zwischen einem ausgefahrenen Zustand, in dem der Innenraum ein maximales Volumen aufweist, und einem eingefahrenen Zustand, in dem der Innenraum ein minimales Volumen aufweist, verfahrbar ist.

Vorteilhaft an diesem Dachboxsystem ist, dass durch die im auf das Dachgrundelement aufgesetzten Zustand von einer Außenwand des Einsatzkörpers gebildete Außenfläche eine weiter vereinfachte Konstruktion des Dachboxsystems bereitgestellt wird. Der Innenraum des Einsatzkörpers kann dabei zur Aufnahme von Transportgut dienen, wobei die Größe des Innenraumes an die jeweiligen Transportbedürfnisse mittels der Volumenänderungsmittel angepasst werden kann. Besonders vorteilhaft an dem Dachboxsystem ist, dass der Einsatzkörper auf das Dachgrundelement aufsetzbar und daran lösbar befestigbar ist. Daher kann der Einsatzkörper sowohl in einem Fahrtzustand des Kraftfahrzeugs, in dem der Einsatzkörper auf dem Dachgrundelement angeordnet ist, als auch unabhängig von der Anordnung auf dem Dachgrundelement benutzt werden. Insbesondere sind im eingefahrenen Zustand die Abmessungen des Einsatzkörpers soweit reduziert, dass dieser im auf dem Dachgrundelement aufgesetzten Zustand nur wenig zur Dicke des Daches in vertikaler Richtung gesehen beiträgt, so dass der Einsatzkörper mit dem Dachgrundelement eine im Wesentlichen vollständig integrierte Einheit bildet. Mit besonderem Vorteil kann das Dach des Dachboxsystem einen umlaufenden Rahmen bzw. eine umlaufende Berandung aufweisen, welcher/welche mit dem Dachgrundelement einen Aufnahmeraum bzw. eine Fassung ausbildet, in den/die der Einsatzkörper derart eingesetzt werden kann, dass der Einsatzkörper vollständig in das Dach integriert ist. Jedoch kann das Dach Grundelement auch ohne einen umlaufenden Rahmen ausgebildet sein. Der Einsatzkörper kann im aufgesetzten Zustand teilweise oder vollständig das Dachgrundelement abdecken, oder der Einsatzkörper kann im aufgesetzten Zustand teilweise oder vollständig das Dach des Kraftfahrzeugs abdecken.

In einer weiteren Ausführungsform ist vorgesehen, dass das Volumen des Innenraums des Einsatzkörpers, insbesondere im nicht eingefahrenen Zustand, zur Aufnahme von Transportgut geeignet ist, und/oder dass die Volumenänderung des Innenraumes mittels der Volumenänderungsmittel, welche insbesondere eine Außenwand des Einsatzkörpers umfassen, durch Falten, Stauchen, Umlegen oder Zusammenschieben mindestens einer Außenwand des Einsatzkörpers hervorrufbar ist, und/oder dass der Einsatzkörper im eingefahrenen und im ausgefahrenen Zustand von außen auf das Dachgrundelement aufsetzbar und daran lösbar befestigbar ist.

Die vorteilhafte Volumenänderung des zur Aufnahme von Transportgut geeigneten Innenraums des Einsatzkörpers wird durch Volumenänderungsmittel erzielt, welche eine Außenwand des Einsatzkörpers umfassen können. Umfassen die Volumenänderungsmittel eine Außenwand des Einsatzkörpers, so kann auf weitere Mittel zur Volumenänderung im Wesentlichen verzichtet werden, was zu einer weiteren Vereinfachung der Dachboxkonstruktion führt. Besonders vorteilhaft und konstruktiv effizient ist es dabei, die Volumenänderung durch Falten, Stauchen, Umlegen oder Zusammenschieben von mindestens einer Außenwand des Einsatzkörpers hervorzurufen. Es ist beispielsweise möglich, dass eine Außenwand des Einsatzkörpers zweiteilig ausgebildet ist, wobei ein erster Teil der Außenwand mit einem zweiten Teil der Außenwand über ein Scharnier verbunden ist. Mittels des Scharniers lässt sich dann die Außenwand zusammenlegen oder zusammenfalten, wodurch eine Volumenänderung des Innenraums hervorgerufen wird. Mit besonderem Vorteil kann der Einsatzkörpers sowohl im eingefahrenen als auch im ausgefahrenen Zustand von außen das Dachgrundelement aufgesetzt werden. Dabei ist der Einsatzkörper im eingefahrenen Zustand besonders raumsparend, während der Einsatzkörper im ausgefahrenen Zustand besonders zum Transport von Transportgut geeignet ist.

In einer weiteren vorteilhaften Ausführungsform des Dachboxsystems sind am Dachgrundelement und/oder am Einsatzkörper Befestigungsmittel ausgebildet, mit denen der am Dachgrundelement angeordnete Einsatzkörper an diesem lösbar befestigbar ist. Ferner kann vorgesehen sein, dass im auf dem Dachgrundelement aufgesetzten Zustand zwischen dem Einsatzkörper und dem Dachgrundelement im Wesentlichen kein freier Raum vorhanden ist.

Das Befestigungsmittel kann dabei als Magnetbefestigung ausgebildet sein. Bevorzugt kann das Befestigungsmittel auch als zweiteiliges Befestigungsmittel ausgebildet sein, wobei beispielsweise ein an dem Einsatzkörper angeordneter Haken in eine komplementäre Öse eingreift, welche insbesondere im Dachgrundelement versenkt angeordnet ist. Mittels der Befestigungsmittel wird der Einsatzkörper im Fahrtzustand des Kraftfahrzeuges vorteilhafterweise am Dachgrundelement lösbar befestigt. Besonders vorteilhaft ist, dass der Einsatzkörper derart auf dem Dachgrundelement angeordnet werden kann, dass im Wesentlichen kein freier Raum zwischen dem Dachgrundelement und dem Einsatzkörper vorhanden ist. Besonders bevorzugt kann der Einsatzkörper unbeanstandet auf das Dachgrundelement aufgesetzt werden. Ein unbeabstandetes Aufsetzen führt vorteilhafter Weise zu einer weiteren Verringerung der vertikalen Dicke des Dachboxsystems.

In einem weiteren Aspekt der Erfindung wird ein Einsatzkörper für das vorbeschriebene Dachboxsystem bereitgestellt. Dabei ist vorgesehen, dass der Einsatzkörper einen Innenraum aufweist, und dass der Einsatzkörper Volumenänderungsmittel aufweist, wobei das Volumen des Innenraumes mittels der Volumenänderungsmittel veränderbar ist, wobei der Einsatzkörper mittels der Volumenänderungsmittel zwischen einem ausgefahrenen Zustand, in dem der Innenraum ein maximales Volumen aufweist, und einem eingefahrenen Zustand, in dem der Innenraum ein minimales Volumen aufweist, verfahrbar ist, wobei der Einsatzkörper ein Bewegungsmittel, insbesondere Rollen oder Kufen, aufweist, wobei das Bewegungsmittel in den Hauptkörper des Einsatzkörpers versenkbar und/oder umklappbar ausgebildet ist, derart dass die versenkten oder umgeklappten Bewegungsmittel bevorzugt nicht vom Hauptkörper des Einsatzkörpers hervorstehen.

Ein derartiger Einsatzkörper ist in besonders vorteilhafter Weise für ein vorbeschriebenes Dachboxsystem geeignet. Ferner kann der Einsatzkörper so auf das Dachgrundelement aufgesetzt werden, dass er vollständig im Dach integriert ist.

Eine Weiterbildung des Einsatzkörpers sieht vor, dass der Einsatzkörper, welcher insbesondere als Trolley ausgebildet ist, ein, insbesondere als Zugmittel, Schubmittel oder Tragemittel ausgebildetes Transportmittel aufweist, wobei das Transportmittel bevorzugt als versenkbarer Ziehbügel ausgebildet ist.

Neben der Möglichkeit den Einsatzkörper in integrativer Weise auf das Dachgrundelement aufzusetzen, ist der Einsatzkörper auch vom Dachgrundelement abnehmbar, so dass der Einsatzkörper, insbesondere als handgeführter Trolley, zum Transport von Transportgut geeignet ist. Dabei unterstützen die Transportmittel, insbesondere der versenkbare Ziehbügel, und die Bewegungsmittel, insbesondere die Rollen, die einfache Handhabung des als Trolley ausgebildeten Einsatzkörpers. Bevorzugt weist der Einsatzkörper, insbesondere der Trolley, eine Schutzschicht oder eine, insbesondere aus einem weichen und verformbaren Material bestehende, Pufferschicht auf. Die Schutzschicht oder Pufferschicht ist dabei bevorzugt auf einer im auf dem Dachgrundelement aufgesetzten Zustand dem Dachgrundelement zugewandten Außenwand des Einsatzkörpers aufgetragen oder angebracht. Die Schutzschicht oder Pufferschicht erzielt den Vorteil, dass die Gefahr der Entstehung von Kratzern auf dem Dachgrundelement bei Anordnung des Einsatzkörpers, insbesondere des Trolleys, auf dem Dachgrundelement des Dachboxsystems verringert wird. Alternativ können ein oder mehrere, von der im aufgesetzten Zustand dem Dachgrundelement zugewandten Außenwand des Einsatzkörpers vorstehende Schutzelemente vorgesehen sein.

Eine weiter bevorzugte Ausgestaltungsform des vorbeschriebenen Dachboxsystems und des vorbeschriebenen Einsatzkörpers beziehungsweise Koffers sieht vor, dass ein Anzeigemittel an einer Außenwand des Einsatzkörpers beziehungsweise des Koffers angeordnet ist. Das Anzeigemittel kann beispielsweise als Bildschirm oder als anderweitiger optischer Signalgeber ausgebildet sein. Weiter bevorzugt ist das Anzeigemittel als berührungsempfindlicher Bildschirm, auch "Touchscreen" genannt, ausgebildet.

Ist der Einsatzkörper beziehungsweise der Koffer im Zwischenraum zwischen dem mindestens ein Deckenelement und dem Dachgrundelement beziehungsweise auf dem Dachgrundelement angeordnet und bildet dementsprechend mindestens eine Außenwand des Einsatzkörpers eine Außenfläche des Dachboxsystems, so können auf dem bevorzugt in dieser Außenwand angeordnetem Anzeigemittel Informationen angezeigt werden. Die angezeigten Informationen können beispielsweise das Kraftfahrzeugkennzeichen des Kraftfahrzeuges oder auch ein weiteres Signallicht, wie beispielsweise ein Bremslicht sein. Ferner kann auf dem Anzeigemittel der Inhalt des Einsatzkörpers angezeigt werden. Hierfür kann eine im Einsatzkörper installierte beziehungsweise im Innenraum des Einsatzkörpers installierte Kameravorrichtung vorgesehen sein. Auch ist es möglich dass das Anzeigemittel zumindest teilweise durchsichtig ist, so dass direkt auf optischem Wege der Innenraum des Einsatzkörpers sichtbar ist.

Ist das Anzeigemittel als Touchscreen ausgebildet, so kann ferner ein elektronisches Schloss am Einsatzkörper vorgesehen sein, welches durch Eingabe eines Codes oder ähnlichem auf dem Touchscreen geöffnet oder geschlossen wird.

Weiter umfasst die Erfindung selbstverständlich auch Kombinationen der vorbeschriebenen Dachboxsysteme und Einsatzkörper, beziehungsweise Kombinationen der Merkmale der vorbeschriebenen Dachboxsysteme und Einsatzkörper. So ist für den Fachmann beispielsweise ersichtlich, dass der letztbeschriebene Einsatzkörper in einfacher und analoger Weise mit einem Dachboxsystem für ein (Cabrio-)Dach gemäß einer vorher beschriebenen Ausführungsform verwendet werden kann.

### Kurze Beschreibung der Zeichnungen

Ausführungsbeispiele der Erfindung werden nachstehend anhand der Zeichnungen näher erläutert. Es zeigen:
- Fig. 1: in einer perspektivischen Ansicht ein Deckenelement und ein Dachgrundelement des Dachboxsystems für ein Kraftfahrzeug im Aufnahmezustand,
- Fig. 2: in einer perspektivischen Ansicht einen als Rollkoffer oder Trolley ausgebildeten Einsatzkörper,
- Fig. 3: in einer perspektivischen Ansicht das Dachboxsystem aus Fig. 1 mit eingesetztem Einsatzkörper,
- Fig. 4: eine weitere Ausführungsform des Dachboxsystems bei dem ein Teilbereich des Deckenelementes mittels Verformungsmittel in den Aufnahmezustand gebracht ist,
- Fig. 5: einen für das Dachboxsystem aus Fig. 4 geeigneten Einsatzkörper,
- Fig. 6: eine weitere Ausführungsform des Dachboxsystems im Grundzustand umfassend eine Komplementäröffnung im Deckenelement,
- Fig. 7: das Dachboxsystem aus Fig. 6 im Aufnahmezustand, und
- Fig. 8: in einer perspektivischen Ansicht ein Dachboxsystem für ein Cabriodach.

### Bevorzugte Ausführungsform der Erfindung

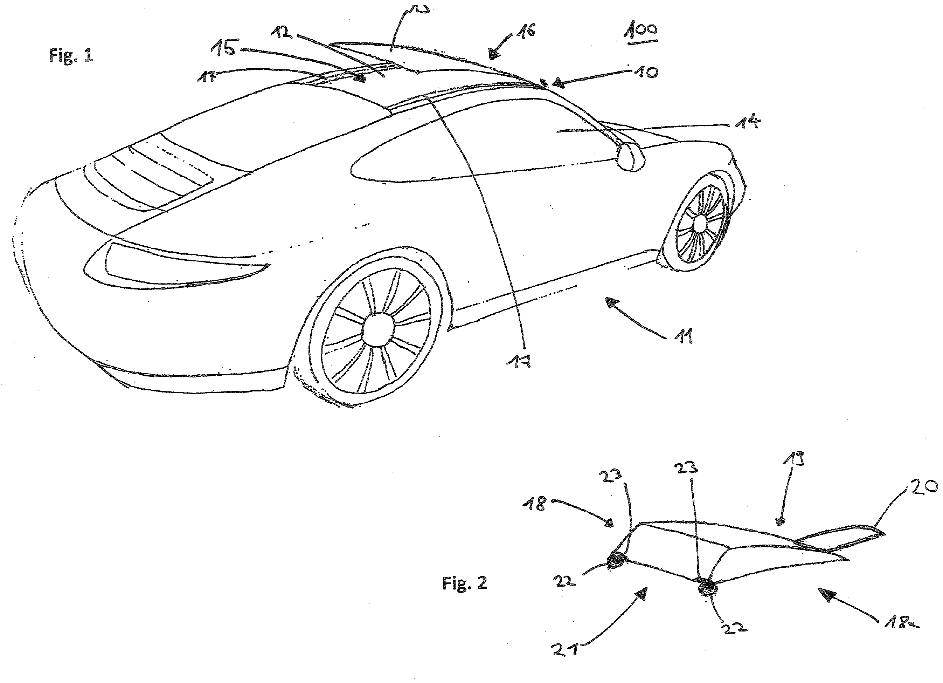

Fig. 1 zeigt eine bevorzugte Ausführungsform des erfindungsgemäßen Dachboxsystems für Kraftfahrzeuge (100). Das Dachboxsystem umfasst ein Dach (10) eines Kraftfahrzeuges (11), ein Dachgrundelement (12) sowie ein an dem Dachgrundelement (12) angeordnetes Deckenelement (13). Das Deckenelement (13) ist dabei in vertikaler Richtung oberhalb des Dachgrundelementes (12) angeordnet, und das Dachgrundelement (12) befindet sich im Wesentlichen oberhalb der Fahrgastzelle (14) des Kraftfahrzeugs (11). In Fig. 1 ist das Dachboxsystem (100) im Aufnahmezustand dargestellt, das heißt, dass das Deckenelement (13) von einem Grundzustand in einen Aufnahmezustand verfahren ist, wobei zwischen dem Dachgrundelement (12) und dem Deckenelement (13) ein Zwischenraum (15) entstanden ist. Das Deckenelement (13) ist dabei um eine senkrecht zur Fahrtrichtung des Kraftfahrzeuges (11) angeordnete horizontale Achse schwenkbar im vorderen Bereich (16) des Dachgrundelementes (12) angeordnet. Auf dem Dachgrundelement (12) sind zwei in Fahrtrichtung an den Außenseiten verlaufende Führungsschienen (17) erkennbar. Die Führungsschienen (17) dienen zur Führung des in den Zwischenraum (15) einzusetzenden Einsatzkörpers (18).

Ein erfindungsgemäßer Einsatzkörper (18) beziehungsweise ein für das Dachboxsystem (100) geeigneter Einsatzkörper (18) ist in Fig. 2 dargestellt. Der dargestellte Einsatzkörper (18) ist dabei als Rollkoffer (18a) beziehungsweise Trolley ausgebildet, welcher in seiner Grundform im Wesentlichen keilförmig ist. In einem ersten Endbereich (19) des Einsatzkörpers (18) beziehungsweise des Rollkoffers (18a) ist ein einfahrbarer beziehungsweise versenkbarer Ziehbügel (20) angeordnet. An einem dem ersten Endbereich (19) gegenüberliegenden zweiten Bereich (21) des Einsatzkörpers (18), welcher den unteren Bereich des Rollkoffers (18a) darstellt, wenn dieser von einer Person gezogen wird, sind in den Außenbereichen zwei umklappbare Rollen (22) erkennbar. In unmittelbarer Nähe der Rollen (22) befindet sich jeweils eine Aussparung (23) oder Einkerbung im Hauptkörper des Rollkoffers (18a), welche dazu dienen, die Rollen (22) im eingefahrenen beziehungsweise umgeklappten Zustand bündig aufzunehmen.

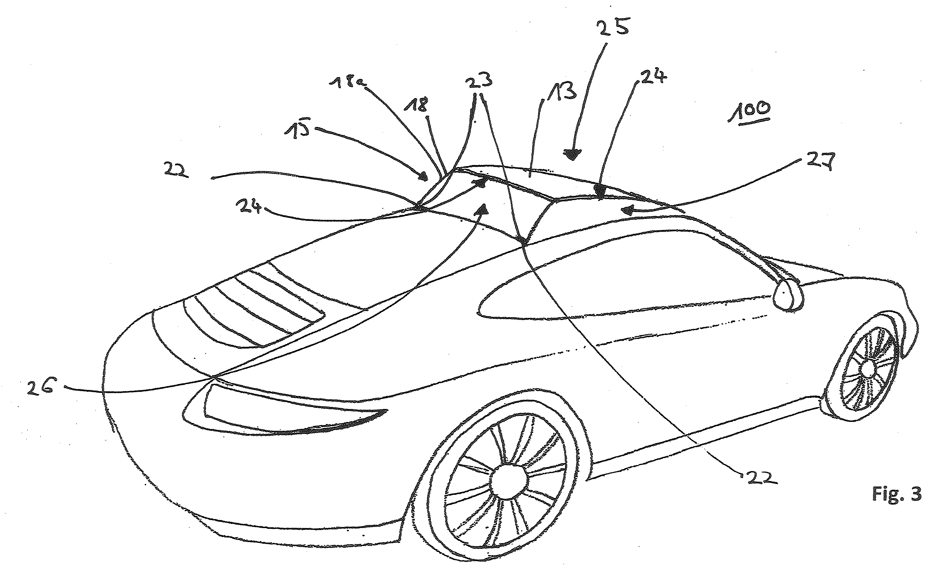

Fig. 3 zeigt das Dachboxsystem (100) in der bevorzugten Ausführungsform mit in den Zwischenraum (15) angeordnetem Einsatzkörper (18), welcher hier als Rollkoffer (18a) aus Fig. 2 ausgebildet ist. Die Form des Hauptkörpers des Rollkoffers (18a) ist dabei so ausgebildet, dass diese im Wesentlichen komplementär zu der aus Deckenelement (13) und Dachgrundelement (12) gebildeten Zwischenraum (15) ist. Aufgrund dieser Komplementarität bildet der Rollkoffer (18a) mit dem Deckenelement (13) eine an dem Dachgrundelement (12) angeordnete, im Wesentlichen geschlossene aerodynamisch vorteilhafte Form. Dabei passt der Einsatzkörper (18) beziehungsweise der Rollkoffer (18a) so in den Zwischenraum (15) des Dachboxsystems (100) ein, dass in den Übergangsbereichen (24) zwischen dem Deckenelement (13) und dem Einsatzkörper (18) lediglich geringe Spaltmaße auftreten. Bei dem in den Zwischenraum (15) eingesetzten Einsatzkörper (18) ist der Ziehbügel (20) des Rollkoffers (18a) eingefahren, und die Rollen (22) sind in einem umgeklappten beziehungsweise versenkten Zustand und befinden sich im Wesentlichen in den Aussparungen (23), welche am Hauptkörper des Rollkoffers (18a) ausgebildet sind. Dabei können beispielsweise durch einen hier nicht dargestellten Auslösemechanismus die Rollen (22) automatisch beim Einfahren des Ziehbügels (20) umgeklappt werden.

Bei dem Dachboxsystem (100) der Fig. 3 wird die Oberseite (25) des Dachboxsystems (100) durch das Deckenelement (13) gebildet. Die Rückfläche (26) sowie die Außenflächen (27) des Dachboxsystems (100) werden von den Außenwänden des Einsatzkörper (18), bzw. des Rollkoffers (18a) gebildet, welche vorteilhafterweise in Wagenfarbe lackierbar sein können.

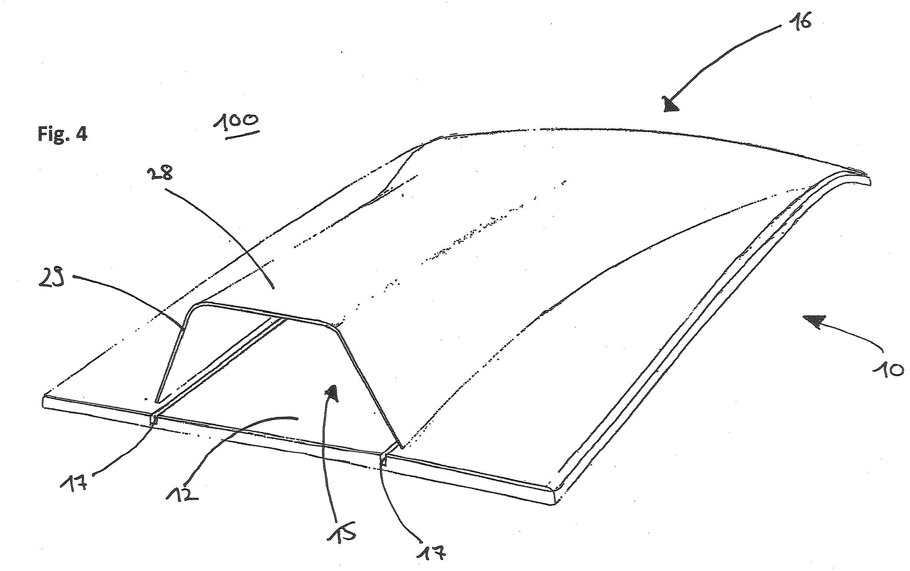

Fig. 4 zeigt eine weitere Ausführungsform des Dachboxsystems (100). Ausschnittsweise ist hier lediglich das Dach (10) des Kraftfahrzeuges (11) des Dachboxsystems (100) dargestellt, umfassend ein Dachgrundelement (12) sowie ein verformbares beziehungsweise verbiegbares Deckenelement (28), das in Fig. 4 im Aufnahmezustand verfahren gezeigt wird. Das verformbare Deckenelement (28) ist dabei durch ein mechanisches Verformungsmittel (29), hier ein verschwenkbares Gestänge in den Aufnahmezustand verfahren beziehungsweise verformt. In dieser besonderen Ausführungsform besteht das Deckenelement (28) aus einem dehnbaren Material, wobei durch Verschwenken des Gestänges das dehnbare Material von einem ungedehnten Zustand in einen gedehnten Zustand versetzt wird und so zwischen dem Grundzustand und dem Aufnahmezustand verfahren werden kann.

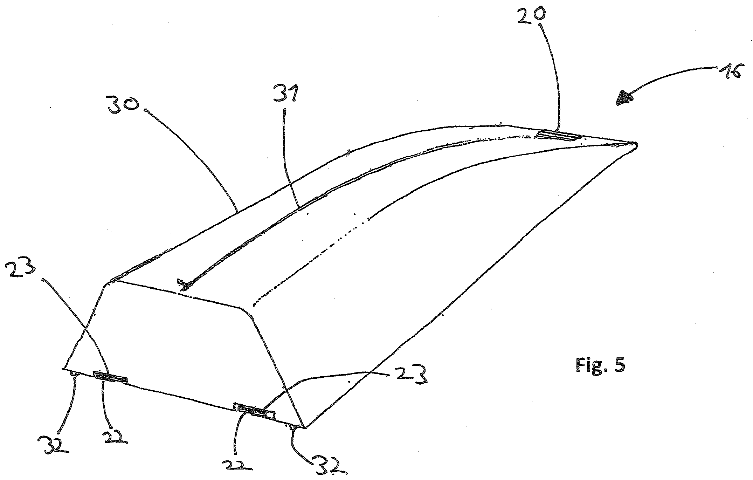

Im in Fahrtrichtung des Kraftfahrzeugs (11) gesehenen vorderen Bereich (16) des Dachboxsystems verläuft der ausgebildete Zwischenraum (15) im Wesentlichen keilförmig, das heißt, der Zwischenraum (15) nimmt in der Höhe in Richtung der Fahrtrichtung des Kraftfahrzeuges (11) ab. In Fahrtrichtung gesehen nimmt die horizontale Breite des Zwischenraumes (15) im Aufnahmezustand kontinuierlich zu, wodurch eine besonders aerodynamische und ästhetisch ansprechende Formgebung erzielt wird. Ein erstes Führungsmittel in Form von Führungsschienen (17) oder Führungsleisten ist auf dem Dachgrundelement (12) angeordnet. Ein für die Ausführungsform des Dachboxsystems (100) nach Fig. 4 geeigneter Einsatzkörper (30) wird in Fig. 5 dargestellt.

Der Einsatzkörper (30) der Fig. 5 weist eine im Wesentlichen zu dem Zwischenraum (15) komplementäre Form auf, lediglich im in Fahrtrichtung des Kraftfahrzeugs (11) gesehen vorderen Bereich (16) des Dachgrundelements (12) weist der Einsatzkörper (30) in horizontaler beziehungsweise lateraler Richtung eine geringere Ausdehnung auf. Weiter umfasst der Einsatzkörper (30) auf der Oberseite einen Reißverschluss (31), mit welchem der Einsatzkörper (30) geöffnet werden kann. An der Unterseite des Einsatzkörpers (30) befinden sich ein zweites als Führungsleiste (32) ausgebildetes Führungsmittel, welches beim Einsetzen des Einsatzkörpers (30) in den Zwischenraum (15) des Dachboxsystems (100) mit den Führungsschienen (17) des Dachgrundelementes (12) wirkverbindbar ist, und den Einsatzkörper (30) wiederholbar und mit einer hohen Positionierungsgenauigkeit in den Zwischenraum (15) einführbar macht.

Auf der Unterseite des Einsatzkörpers (30), zwischen den Führungsleisten (32), befinden sich in der Nähe der Rückseite des Einsatzkörpers (30) zwei Aussparungen (23) beziehungsweise Vertiefungen. Im hier gezeigten Zustand sind in den Aussparungen (23) zwei Rollen (22) dargestellt, durch welche der Einsatzkörper (30) im nicht eingesetzten Zustand als Rollkoffer benutzt werden kann. Dazu befindet sich ergänzend im vorderen Bereich des Einsatzkörpers (30) ein Ziehbügel (20).

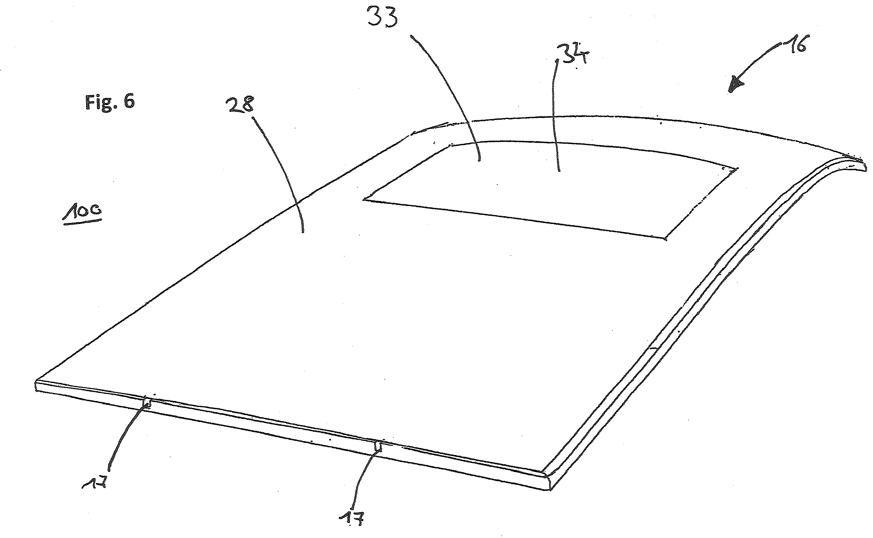

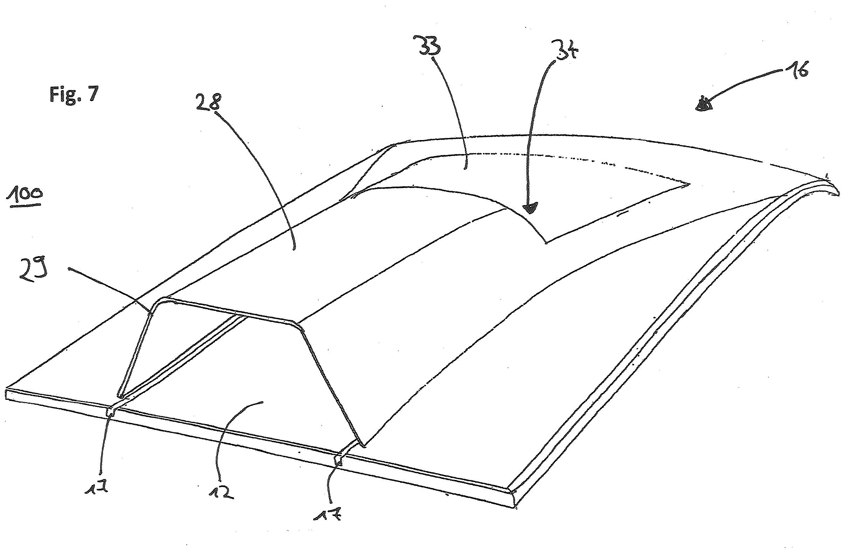

Die Fig. 6 und 7 zeigen eine weitere bevorzugte Ausführungsform des Dachboxsystems (100), welches im Wesentlichen mit dem Dachboxsystem (100) der Fig. 4 übereinstimmt. Jedoch befindet sich in dem verformbaren Deckenelement (28) des in Fig. 6 dargestellten Dachboxsystems (100) im vorderen Bereich (16) des Dachboxsystems (100) eine Komplementäröffnung (33), welche sich im hier dargestellten Grundzustand deckungsgleich über der Öffnung (34) eines im Dachgrundelement (12) angeordneten Sonnendaches befindet. Das Sonnendach ist dabei so ausgebildet, dass es in vertikaler Richtung gesehen nach oben leicht über das Dachgrundelement (12) hinaus steht und in die Komplementäröffnung (34) des verformbaren Deckenelementes (28) hineinragt, wodurch das Sonnendach im Grundzustand bündig mit der Oberseite des verformbaren Deckenelementes (28) abschließt.

Fig. 7 zeigt das Dachboxsystem (100) der Fig. 6 im Aufnahmezustand. Das im Aufnahmezustand verformte dehnbare Material des Deckenelementes (28) weist die Komplementäröffnung (34) im vorderen Bereich (16) des Deckenelementes (28) auf. Die Komplementäröffnung (34) kann durch einen hier nicht weiter dargestellten Einsatzkörper, welcher ein der Komplementäröffnung (34) entsprechendes, insbesondere schildförmiges, Verschlusselement im vorderen Bereich aufweist, bündig verschlossen werden.

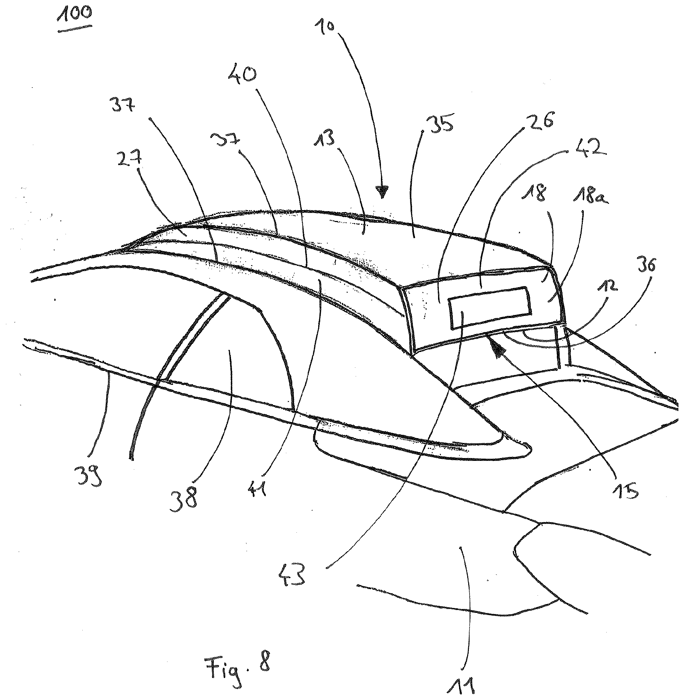

Fig. 8 zeigt ein Dachboxsystem (100), welches auf einem als Cabriodach ausgebildeten Dach (10) eines Kraftfahrzeuges (11) angeordnet ist. Das Dachboxsystem (100) ist im Aufnahmezustand dargestellt, wobei zwischen dem Deckenelement (13) und dem Dachgrundelement (12) ein Zwischenraum (15) ausgebildet ist, in welchem ein als Rollkoffer (18a) ausgebildeter Einsatzkörper (18) angeordnet ist. Das Dachgrundelement (12) umfasst eine erste Lage Verdeckmaterial (36), welches aus einem gewebten und imprägnierten Stoff besteht. Das Deckenelement (13) umfasst eine zweite Lage Verdeckmaterial (35), welches ebenfalls einen gewebten und inprägnierten Stoff aufweist. Die Außenflächen (27) des Dachboxsystems (100) bestehen aus Seitenwandungen (41) umfassend eine weitere Lage Verdeckmaterial, welche über Faltscharniere (37) am Deckenelement (13) und am Dachgrundelement (12) befestigt sind. Die Faltscharniere (37) sind an der Seite des Dachboxsystems (100) in etwa oberhalb der Seitenscheiben (38) bzw. der Fahrgasttüren (39) des Kraftfahrzeuges (11) angeordnet. Weiter weisen die Seitenwandungen (41) des Dachboxsystems (100), welche die Außenflächen (27) des Dachboxsystems bilden, eine Faltlinie (40) in der Seitenwandung (41) auf. Im Grundzustand, bei dem das Deckenelement (13) auf dem Dachgrundelement (12) auffliegt, bzw. in unmittelbarer Nähe des Dachgrundelements (12) angeordnet ist, ist die Seitenwandung (41) entlang der Faltlinie (40) gefaltet.

Der als Rollkoffer (18a) ausgebildete Einsatzkörper (18) ist in Fig. 8 zwischen Dachgrundelement (12) und Deckenelement (13) angeordnet, so dass die Rückfläche (26) des Dachboxsystems (100) durch eine Außenwand (42) des Einsatzkörpers (18) gebildet wird. Die Außenwand (42) des Einsatzkörpers (18), welcher die Rückfläche (26) des Dachboxsystems (100) bildet, weist darüber hinaus ein als Bildschirm (43) ausgebildetes Anzeigemittel auf, auf welchem beispielsweise das Kraftfahrzeugkennzeichen des Kraftfahrzeuges (11) angezeigt werden kann.

### Liste der Bezugszeichen

- 100: Dachboxsystem für Kraftfahrzeuge

- 10: Dach eines Kraftfahrzeuges
- 11: Kraftfahrzeug
- 12: Dachgrundelement
- 13: Deckenelement
- 14: Fahrgastzelle
- 15: Zwischenraum
- 16: Vorderer Bereich des Dachgrundelementes
- 17: Führungsschienen
- 18: Einsatzkörper
- 18a: Rollkoffer
- 19: Erster Endbereich des Einsatzkörpers

- 20: Ziehbügel
- 21: Zweiter Endbereich des Einsatzkörpers
- 22: Rollen
- 23: Aussparung
- 24: Übergangsbereich
- 25: Oberseitenfläche des Dachboxsystems
- 26: Rückfläche des Dachboxsystems
- 27: Außenfläche des Dachboxsystems
- 28: Verformbares Deckenelement
- 29: Verformungsmittel

- 30: Einsatzkörper
- 31: Reißverschluss
- 32: Führungsleiste
- 33: Komplementäröffnung
- 34: Öffnung im Dachgrundelement
- 35: zweite Lage Verdeckmaterial
- 36: erste Lage Verdeckmaterial
- 37: Faltscharnier
- 38: Seitenscheibe
- 39: Fahrgasttür

- 40: Faltlinie
- 41: Seitenwandung
- 42: Außenwand des Einsatzkörpers
- 43: Bildschirm

## Patentansprüche

1. Dachboxsystem (100) für Kraftfahrzeuge,
wobei das Dachboxsystem (100) ein Dach (10) eines Kraftfahrzeuges (11), welches mindestens ein an einem Dachgrundelement (12) angeordnetes Deckenelement (13) aufweist, und einen Einsatzkörper (18) mit mindestens einer Außenwand umfasst, wobei das mindestens eine Deckenelement (13) unter Ausbildung eines zur Aufnahme des Einsatzkörpers (18) geeigneten Zwischenraumes (15) zwischen dem mindestens einen Deckenelement (13) und dem Dachgrundelement (12) von einem Grundzustand in einen Aufnahmezustand verfahrbar ist, wobei im Aufnahmezustand der Einsatzkörper (18) in dem Zwischenraum (15) anordbar ist, derart dass die mindestens eine Außenwand des Einsatzkörpers (18) eine Außenfläche (26, 27) des Dachboxsystems bildet, und wobei der Einsatzkörper einen, bevorzugt geschlossenen oder verschließbaren, Aufnahmeraum, welcher zur Aufnahme von Transportgut geeignet ist, umfasst.

2. Dachboxsystem nach Anspruch 1,
**dadurch gekennzeichnet,**
**dass** das mindestens eine Deckenelement (13) an dem Dachgrundelement (12) um eine Achse, bevorzugt um eine horizontale Achse, besonders bevorzugt um eine senkrecht zur Fahrtrichtung eines Kraftfahrzeuges (11) angeordnete horizontale Achse schwenkbar angeordnet ist, wobei die Achse bevorzugt im in Fahrtrichtung gesehen vorderen Teil (16) des Dachgrundelements (12) angeordnet ist.

3. Dachboxsystem nach einem der vorgenannten Ansprüche 1 oder 2,
**dadurch gekennzeichnet,**
**dass** die Form des im Aufnahmezustand ausgebildeten Zwischenraums (15) und die Form des Einsatzkörpers (18) im Wesentlichen zueinander komplementär sind, wobei bevorzugt der im Zwischenraum (15) angeordnete Einsatzkörper (18) den Zwischenraum (15) im Wesentlichen oder vollständig ausfüllt, und/oder
**dass** der im Aufnahmezustand ausgebildete Zwischenraum (15) eine in Fahrtrichtung eines Kraftfahrzeuges (11) betrachtet nach vorne in der Höhe abnehmende, im Wesentlichen keilförmige Form aufweist, und dass der Einsatzkörper (18) eine im Wesentlichen keilförmige Form aufweist.

4. Dachboxsystem nach einem der vorgenannten Ansprüche,
**dadurch gekennzeichnet,**
**dass** der Einsatzkörper (18) mindestens drei Außenwände umfasst, welche bei im Aufnahmezustand im Zwischenraum (15) angeordnetem Einsatzkörper (18) drei Außenflächen (26, 27), insbesondere zwei Seitenflächen (27) und eine Rückfläche (26), des Dachboxsystems bilden.

5. Dachboxsystem nach einem der Ansprüche 1 bis 3,
**dadurch gekennzeichnet,**
**dass** Seitenwandungen (41) im Bereich zwischen Dachgrundelement (12) und Deckenelement (13) vorgesehen sind, wobei bevorzugt die Seitenwandungen (41) in das Dach (10) des Kraftfahrzeuges (11) integriert und/oder an diesem angeordnet sind, so dass die Seitenwandungen (41) im Aufnahmezustand zwei Außenflächen (27), insbesondere zwei Seitenflächen (27), des Dachboxsystems bilden.

6. Dachboxsystem nach einem der vorgenannten Ansprüche,
**dadurch gekennzeichnet,**
**dass** das mindestens eine Deckenelement (13) und der im Aufnahmezustand in dem Zwischenraum (15) angeordnete Einsatzkörper (18) eine an dem Dachgrundelement (12) angeordnete, im Wesentlichen geschlossene, aerodynamisch vorteilhafte Form bilden, wobei die Oberfläche der Form, insbesondere in dem Übergangsbereich (24) von dem mindesten einen Deckenelement (13) und dem Einsatzkörper (18), geringe Spaltmaße aufweist.

7. Dachboxsystem nach einem der vorgenannten Ansprüche,
**dadurch gekennzeichnet,**
**dass** das Dachboxsystem ein erstes Führungsmittel, insbesondere Führungsschienen (17) oder Führungsleisten, am mindestens einen Deckenelement (13), insbesondere an der Innenseite des mindestens einen Deckenelements (13), und/oder am Dachgrundelement (12) aufweist, wobei bevorzugt der Einsatzkörper (18) ein zweites Führungsmittel aufweist, welches mit dem ersten Führungsmittel wirkverbindbar ist, wobei das zweite Führungsmittel insbesondere Rollen (22), Leisten oder Stifte umfasst.

8. Dachboxsystem nach einem der vorgenannten Ansprüche,
**dadurch gekennzeichnet,**
**dass** der Einsatzkörper (18) als Koffer, insbesondere als Hartschalenkoffer, Rollkoffer (18a) oder Trolley, ausgebildet ist, oder dass der Einsatzkörper (18) als zusammenlegbarer Kinderwagen oder Fahrradanhänger ausgebildet ist, und/oder
**dass** der Einsatzkörper (18), insbesondere ein als Hartschalenkoffer, Rollkoffer (18a), Trolley, Kinderwagen oder Fahrradanhänger ausgebildeter Einsatzkörper (18), Rollen (22) aufweist, wobei die Rollen (22) in den Einsatzkörper (18) versenkbar und/oder umklappbar ausgebildet sind, derart dass die versenkten oder umgeklappten Rollen (22) nicht vom Einsatzkörper (18) hervorstehen.

9. Dachboxsystem nach einem der vorgenannten Ansprüche,
**dadurch gekennzeichnet,**
**dass** das Dachgrundelement (12) eine Öffnung (34), insbesondere eine Öffnung (34) für ein Sonnendach, aufweist, und dass das mindestens eine Deckenelement (13) eine der Form der Öffnung (34) entsprechende Komplementäröffnung (33) aufweist, wobei die Komplementäröffnung (33) im Wesentlichen über der Öffnung (34) im Dachgrundelement (12) angeordnet ist, derart dass im Grundzustand des mindestens einen Deckenelementes (13) die Komplementäröffnung (33) des mindestens einen Deckenelementes (13) im Wesentlichen deckungsgleich auf der Öffnung (34) des Dachgrundelementes (12) angeordnet ist, wobei bevorzugt der Einsatzkörper (18) ein der Form der Komplementäröffnung (33) des mindestens einen Deckenelementes (13) entsprechendes Verschlußelement, insbesondere ein schildförmiges Verschlußelement, aufweist, welche bei im Aufnahmezustand im Zwischenraum (15) angeordnetem Einsatzkörper (18) in die Komplementäröffnung (33) des mindestens einen Deckenelementes (13) einpasst.

10. Dachboxsystem nach einem der vorgenannten Ansprüche,
**dadurch gekennzeichnet,**
**dass** das Dach (10) des Dachboxsystems als Cabriodach, insbesondere als ein unter eine Kofferraumabdeckung versenkbares Cabriodach, ausgebildet ist.

11. Dachboxsystem nach einem der vorgenannten Ansprüche,
**dadurch gekennzeichnet,**
**dass** der Einsatzkörper (18) einen Koffer umfasst, der eine im Wesentlichen keilförmige Form aufweist, dass der Koffer als Rollkoffer (18a) oder Trolley ausgebildet ist, und dass der Koffer Rollen (22) aufweist, wobei die Rollen (22) in den Hauptkörper des Koffers versenkbar und/oder umklappbar ausgebildet sind, derart dass die versenkten oder umgeklappten Rollen (22) nicht vom Hauptkörper des Koffers hervorstehen, wobei die Rollen (22) bevorzugt als zweites Führungsmittel ausgebildet sind.

12. Dachboxsystem für Kraftfahrzeuge nach Anspruch 1,
**dadurch gekennzeichnet,**
**dass**
der Einsatzkörper (18) von außen auf das Dachgrundelement (12) unbeabstandet aufsetzbar und daran lösbar befestigbar ist,
**dass** der Einsatzkörper (12) einen Innenraum aufweist und dass der Einsatzkörper (18) Volumenänderungsmittel aufweist, wobei das Volumen des Innenraumes mittels der Volumenänderungsmittel veränderbar ist, wobei der Einsatzkörper (18) mittels der Volumenänderungsmittel zwischen einem ausgefahrenen Zustand, in dem der Innenraum ein maximales Volumen aufweist, und einem eingefahrenen Zustand, in dem der Innenraum ein minimales Volumen aufweist, verfahrbar ist.

13. Dachboxsystem nach Anspruch 12,
**dadurch gekennzeichnet,**
**dass** das Volumen des Innenraums des Einsatzkörpers (18), insbesondere im nicht eingefahrenen Zustand, zur Aufnahme von Transportgut geeignet ist, und/oder dass die Volumenänderung des Innenraumes mittels der Volumenänderungsmittel, welche insbesondere eine Außenwand (42) des Einsatzkörpers (18) umfassen, durch Falten, Stauchen, Umlegen oder Zusammenschieben mindestens einer Außenwand (42) des Einsatzkörpers (18) hervorrufbar ist, und/oder dass der Einsatzkörper (18) im eingefahrenen und im ausgefahrenen Zustand von außen auf das Dachgrundelement (12) aufsetzbar und daran lösbar befestigbar ist.

14. Dachboxsystem nach Anspruch 12 oder 13,
**dadurch gekennzeichnet,**
**dass** am Dachgrundelement (12) und/oder am Einsatzkörper (18) Befestigungsmittel ausgebildet sind, mit denen der am Dachgrundelement (12) angeordnete Einsatzkörper (18) lösbar befestigbar ist, und/oder dass im auf das Dachgrundelement (12) aufgesetzten Zustand zwischen dem Einsatzkörper (18) und dem Dachgrundelement (12) im Wesentlichen kein freier Raum vorhanden ist.

15. Einsatzkörper für ein Dachboxsystem nach einem der Ansprüche 12 bis 14,
**dadurch gekennzeichnet,**
**dass** der Einsatzkörper (18) einen Innenraum aufweist, und dass der Einsatzkörper (18) Volumenänderungsmittel aufweist, wobei das Volumen des Innenraumes mittels der Volumenänderungsmittel veränderbar ist, wobei der Einsatzkörper(18) mittels der Volumenänderungsmittel zwischen einem ausgefahrenen Zustand, in dem der Innenraum ein maximales Volumen aufweist, und einem eingefahrenen Zustand, in dem der Innenraum ein minimales Volumen aufweist, verfahrbar ist, wobei der Einsatzkörper (18) ein Bewegungsmittel aufweist, wobei das Bewegungsmittel als Rollen oder Kufen ausgebildet ist, wobei das Bewegungsmittel in den Hauptkörper des Einsatzkörpers (18) versenkbar und/oder umklappbar ausgebildet ist, derart dass das versenkte oder umgeklappte Bewegungsmittel bevorzugt nicht vom Hauptkörper des Einsatzkörpers (18) hervorsteht, wobei bevorzugt der Einsatzkörper (18), welcher insbesondere als Trolley ausgebildet ist, ein, insbesondere als Zugmittel, Schubmittel oder Tragemittel ausgebildetes Transportmittel aufweist, wobei das Transportmittel bevorzugt als versenkbarer Ziehbügel ausgebildet ist.

## Claims

1. Roof box system (100) for motor vehicles,
wherein the roof box system (100) comprises a roof (10) of a motor vehicle (11) which has at least one ceiling element (13) arranged at a roof base element (12), and an insertion body (18) with at least one outer wall, wherein the at least one ceiling element (13) is movable from an initial state to a receiving state by forming an interspace (15) suitable for receiving the insertion body (18) between the at least one ceiling element (13) and the roof base element (12), wherein in the receiving state the insertion body (18) can be arranged in the interspace (15) in such a way that the at least one outer wall of the insertion body (18) forms an outer surface (26, 27) of the roof box system, and wherein the insertion body comprises a, particularly closed or lockable, receiving space, which is suitable for receiving transport goods.

2. Roof box system according to claim 1,
**characterized in that**
the at least one ceiling element (13) is arranged on the roof base element (12) rotatable about an axis, preferably about a horizontal axis, particularly preferably about a horizontal axis arranged perpendicular to the direction of travel of a motor vehicle (11), wherein the axis is preferably arranged in the front part (16) of the roof base element (12), seen in the driving direction.

3. Roof box system according to one of the preceding claims 1 or 2,
**characterized in that**
the shape of the interspace (15) formed in the receiving state and the shape of the insertion body (18) are substantially complementary to each other, wherein preferably the insertion body (18) arranged in the interspace (15) substantially or completely fills out the interspace (15), and/or
**in that** the interspace (15) formed in the receiving state has a substantially wedge-shaped shape, which decreases in height towards the front, seen in the direction of travel of a motor vehicle (11), and **in that** the insertion body (18) has a substantially wedge-shaped shape.

4. Roof box system according to one of the preceding claims,
**characterized in that**
the insertion body (18) comprises at least three outer walls, which, when the insertion body (18) is arranged in the interspace (15) in the receiving state, form three outer surfaces (26, 27), in particular two side surfaces (27) and a rear surface (26) of the roof box system.

5. Roof box system according to one of claims 1 to 3,
**characterized in that**
side walls (41) are provided in the region between the roof base element (12) and the ceiling element (13), wherein preferably the side walls (41) are integrated into the roof (10) of the motor vehicle (11) and / or are arranged at the same, so that the side walls (41) in the receiving state form two outer surfaces (27), in particular two side surfaces (27), of the roof box system.

6. Roof box system according to one of the preceding claims,
**characterized in that**
the at least one ceiling element (13) and the insertion body (18) arranged in the receiving state in the interspace (15) form a substantially closed, aerodynamically advantageous shape arranged at the roof base element (12), wherein the surface of the shape, in particular in the transition area (24) of the at least one ceiling element (13) and the insertion body (18), has minor gap dimensions.

7. Roof box system according to one of the preceding claims,
**characterized in that**
the roof box system has a first guiding means, in particular guide rails (17) or guide bars, on the at least one ceiling element (13), in particular on the inside of the at least one ceiling element (13), and / or on the roof base element (12), wherein preferably the insertion body (18) has a second guiding means, which is operatively connectable to the first guiding means, wherein the second guiding means in particular has rollers (22), bars or pins.

8. Roof box system according to one of the preceding claims,
**characterized in that**
the insertion body (18) is configured as a suitcase, in particular as a hard-top case, rolling suitcase (18a) or trolley, or that the insertion body (18) is configured as a foldable buggy or bicycle trailer, and/or
that the insertion body (18), in particular an insertion body (18) configured as a hard-top case, rolling suitcase (18a), trolley, buggy or bicycle trailer, has rollers (22), wherein the rollers (22) are configured in a manner so that they can be sunk into the insertion body (18) and / or are configured foldable in such a way that the sunk or folded rollers (22) do not protrude from the insertion body (18).

9. Roof box system according to one of the preceding claims,
**characterized in that**
the roof base element (12) has an opening (34), in particular an opening (34) for a sunroof, and **in that** the at least one ceiling element (13) has a complementary opening (33) corresponding to the shape of the opening (34), wherein the complementary opening (33) is arranged substantially above the opening (34) in the roof base element (12), in such a way that in the initial state of the at least one ceiling element (13) the complementary opening (33) of at least one ceiling element (13) is arranged substantially congruently on the opening (34) of the roof base element (12), wherein preferably the insertion body (18) has a closure element corresponding to the shape of the complementary opening (33) of the at least one ceiling element (13), in particular a shield-shaped closure element, which, when the insertion body (18) is arranged in the interspace (15) in the receiving state, fits into the complementary opening (33) of the at least one ceiling element (13).

10. Roof box system according to one of the preceding claims,
**characterized in that**
the roof (10) of the roof box system is configured as a convertible roof, in particular as a convertible roof which can be sunk under a trunk cover.

11. Roof box system according to one of the preceding claims,
**characterized in that**
the insertion body (18) comprises a suitcase which has a substantially wedge-shaped shape, **in that** the suitcase is configured as a rolling suitcase (18a) or a trolley, and **in that** the suitcase has rollers (22), wherein the rollers (22) are configured in a manner so that they can be sunk into the main body of the suitcase and / or are configured foldable in such a way that the sunk or folded rollers (22) do not protrude from the main body of the suitcase, wherein the rollers (22) are preferably configured as a second guiding means.

12. Roof box system for motor vehicles according to claim 1,
**characterized in that**
the insertion body (18) can be placed from the outside onto the roof base element (12) without a distance and can be detachably fastened thereto,
**in that** the insertion body (18) has an interior space and **in that** the insertion body has volume changing means, wherein the volume of the interior space can be changed by means of the volume changing means, wherein the insertion body (18), by means of the volume changing means, is movable between an extended state, in which the interior space has a maximum volume, and a retracted state, in which the interior space has a minimum volume.

13. Roof box system according to claim 12,
**characterized in that**
the volume of the interior of the insertion body (18), in particular in the non-retracted state, is suitable for receiving transport goods, and / or **in that** the volume change of the interior space by means of the volume changing means, which in particular comprise an outer wall (42) of the insertion body (18), can be achieved by folding, compressing, relocating or pushing together at least one outer wall (42) of the insertion body (18), and / or **in that** the insertion body (18) can be placed from the outside on the roof base element (12) in the retracted and in the extended state and can be detachably fastened thereto.

14. Roof box system according to claim 12 or 13,
**characterized in that**
on the roof base element (12) and / or on the insertion body (18) fastening means are configured, by means of which the insertion body (18) arranged at the roof base element (12) can be detachably fastened, and / or **in that** essentially no free space is available between the insertion body (18) and the roof base element (12), in a state installed on the roof base element (12).

15. Insertion body for a roof box system according to one of claims 12 to 14,
**characterized in that**
the insertion body (18) has an interior space, and **in that** the insertion body (18) has volume changing means, wherein the volume of the interior space can be changed by means of the volume changing means, wherein the insertion body (18), by means of the volume changing means, can be moved between an extended state, in which the interior space has a maximum volume, and a retracted state, in which the interior has a minimum volume, wherein the insertion body (18) has a moving means, wherein the moving means is configured as rollers or runners, wherein the moving means is configured in a manner that it can be sunk into the main body of the insertion body (18)and/or is configured foldable in such a way that the sunk or folded moving means preferably does not protrude from the main body of the insertion body (18), wherein the insertion body (18), which is in particular configured as a trolley, preferably has a transport means, which is in particular configured as a traction means, a thrust means or a carrier means, wherein the transport means is preferably configured as a retractable pulling handle.

## Revendications

1. Système de coffre de toit (100) destiné à des véhicules automobiles, le système de coffre de toit (100) comportant un toit (10) d'un véhicule automobile (11), lequel comporte au moins un élément de pavillon (13) placé à un élément de base du toit (12), et un corps d'insertion (18) pourvu d'au moins une paroi extérieure,
en formant au moins un espace intermédiaire (15) apte à recevoir le corps d'insertion (18) entre l'au moins un élément de pavillon (13) et l'élément de base du toit (12), l'au moins un élément de pavillon (13) étant déplaçable d'une position de base dans une position de logement, dans la position de logement, le corps d'insertion (18) étant susceptible d'être placé dans l'espace intermédiaire (15), de telle sorte que l'au moins une paroi extérieure du corps d'insertion (18) forme une surface extérieure (26, 27) du système de coffre de toit et le corps d'insertion comprenant un espace de logement, de préférence fermé ou pouvant se fermer, lequel est adapté pour loger des produits à transporter.

2. Système de coffre de toit selon la revendication 1,
**caractérisé**
**en ce que** l'au moins un élément de pavillon (13) est placé à l'élément de base du toit (12) en étant susceptible de pivoter autour d'un axe, de préférence autour d'un axe horizontal, de manière particulièrement préférentielle autour d'un axe horizontal placé à la perpendiculaire d'une direction de déplacement d'un véhicule automobile (11), l'axe étant placé de préférence dans la partie avant (16) de l'élément de base du toit (12), considérée dans la direction de déplacement du véhicule.

3. Système de coffre de toit selon l'une quelconque des revendications précédemment citées 1 ou 2,
**caractérisé**
**en ce que** la forme de l'espace intermédiaire (15) créé dans la position de logement et la forme du corps d'insertion (18) sont sensiblement complémentaires l'une de l'autre, de préférence le corps d'insertion (18) placé dans l'espace intermédiaire (15) comblant sensiblement ou totalement l'espace intermédiaire (15) et/ou
**en ce que** l'espace intermédiaire (15) créé dans la position de logement présente une forme sensiblement cunéiforme, décroissant en hauteur vers l'avant, considérée dans la direction de déplacement d'un véhicule automobile (11) et en ce que le corps d'insertion (18) présente une forme sensiblement cunéiforme.

4. Système de coffre de toit selon l'une quelconque des revendications précédemment citées,
**caractérisé**
**en ce que** le corps d'insertion (18) comprend au moins trois parois extérieures, lesquelles, lorsque le corps d'insertion (18) est placé en position de logement dans l'espace intermédiaire (15) forment trois surfaces extérieures (26, 27), notamment deux surfaces latérales (27) et une surface arrière (26), du système de coffre de toit.

5. Système de coffre de toit selon l'une quelconque des revendications 1 à 3,
**caractérisé**
**en ce que** des parois latérales (41) sont prévues dans la zone entre l'élément de base du toit (12) et l'élément de pavillon (13), de préférence les parois latérales (41) étant intégrées dans le toit (10) du véhicule automobile (11) et/ou placées sur celui-ci, de telle sorte que dans la position de logement, les parois latérales (41) forment deux surfaces extérieures (27), notamment deux surfaces latérales (27), du système de coffre de toit.

6. Système de coffre de toit selon l'une quelconque des revendications précédemment citées,
**caractérisé**
**en ce que** l'au moins un élément de pavillon (13) et le corps d'insertion (18) placé dans l'espace intermédiaire (15) dans la position de logement créent une forme aérodynamique avantageuse, placée à l'élément de base du toit (12), sensiblement close, la surface de la forme, présentant des intervalles étroits, notamment dans la zone de transition (24) entre l'au moins un élément de pavillon (13) et le corps d'insertion (18).

7. Système de coffre de toit selon l'une quelconque des revendications précédemment citées,
**caractérisé**
**en ce que** le système de coffre de toit comporte un premier moyen de guidage, notamment des coulisses de guidage (17) ou des baguettes de guidage, à l'au moins un élément de pavillon (13), notamment sur la face intérieure de l'au moins un élément de pavillon (13) et/ou sur l'élément de base du toit (12), de préférence le corps d'insertion (18) comprenant un deuxième moyen de guidage, lequel est susceptible d'être amené en liaison active avec le premier moyen de guidage, le deuxième moyen de guidage comprenant notamment des galets (22), des baguettes ou des tiges.

8. Système de coffre de toit selon l'une quelconque des revendications précédemment citées,
**caractérisé**
**en ce que** le corps d'insertion (18) est conçu sous la forme d'une valise, notamment d'une valise à coque rigide, d'une valise à roulettes (18a) ou d'un trolley ou en ce que le corps d'insertion (18) est conçu sous la forme d'une poussette pliante ou d'une remorque pour bicyclettes et/ou
**en ce que** le corps d'insertion (18), notamment un corps d'insertion (18) conçu sous la forme d'une valise à coque rigide, d'une valise à roulettes (18a), d'un trolley, d'une poussette ou d'une remorque pour bicyclettes comporte des roulettes (22), les roulettes (22) étant conçues en étant escamotables et/ou rabattables dans le corps d'insertion (18), de telle sorte que les roulettes (22) escamotées ou rabattues ne débordent pas du corps d'insertion (18).

9. Système de coffre de toit selon l'une quelconque des revendications précédemment citées,
**caractérisé**
**en ce que** l'élément de base du toit (12) comporte une ouverture (34), notamment une ouverture (34) pour un toit ouvrant et en ce que l'au moins un élément de pavillon (13) présente une ouverture complémentaire (33) correspondant à la forme de l'ouverture (34), l'ouverture complémentaire (33) étant placée sensiblement au-dessus de l'ouverture (34) dans l'élément de base du toit (12), de telle sorte que dans la position de base de l'au moins un élément de pavillon (13), l'ouverture complémentaire (33) de l'au moins un élément de pavillon (13) soit placée de manière sensiblement coïncidente sur l'ouverture (34) de l'élément de base du toit (12), de préférence le corps d'insertion (18) comportant un élément de fermeture correspondant à la forme de l'ouverture complémentaire (33) de l'au moins un élément de pavillon (13), notamment un élément de fermeture en forme de bouclier, lequel lorsque le corps d'insertion (18) est placé dans la position de logement dans l'espace intermédiaire (15) s'ajuste dans l'ouverture complémentaire (33) de l'au moins un élément de pavillon (13).

10. Système de coffre de toit selon l'une quelconque des revendications précédemment citées,
**caractérisé**
**en ce que** le toit (10) du système de coffre de toit est conçu sous la forme d'un toit de cabriolet, notamment d'un toit de cabriolet escamotable sous un couvercle de coffre.

11. Système de coffre de toit selon l'une quelconque des revendications précédemment citées,
**caractérisé**
**en ce que** le corps d'insertion (18) comprend une valise, qui présente une forme sensiblement cunéiforme, en ce que la valise est conçue sous la forme d'une valise à roulettes (18a) ou d'un trolley et en ce que la valise comporte des roulettes (22), les roulettes (22) étant conçues en étant escamotables et/ou rabattables dans le corps principal de la valise, de telle sorte que les roulettes (22) escamotées ou rabattues ne débordent pas du corps principal de la valise, les roulettes (22) étant conçues de préférence sous la forme d'un deuxième moyen de guidage.

12. Système de coffre de toit destiné à des véhicules automobiles selon la revendication 1,
**caractérisé**
**en ce que** le corps d'insertion (18) peut se placer par l'extérieur sur l'élément de base du toit (12) sans le moindre écart et se fixer de manière amovible sur celui-ci,
**en ce que** le corps d'insertion (18) comporte un espace intérieur et en ce que le corps d'insertion comporte des moyens variateurs de volume, le volume de l'espace intérieur étant variable à l'aide des moyens variateurs de volume, le corps d'insertion étant déplaçable à l'aide des moyens variateurs de volume entre une position déployée, dans laquelle l'espace intérieur présente un volume maximal et une position rentrée, dans laquelle l'espace intérieur présente un volume minimal.

13. Système de coffre de toit selon la revendication 12,
**caractérisé**
**en ce que** le volume de l'espace intérieur du corps d'insertion (18), notamment dans la position non rentrée est apte à loger des produits à transporter et/ou en ce que la variation de volume de l'espace intérieur peut s'engendrer à l'aide des moyens variateurs de volume, lesquels englobent notamment une paroi extérieure (42) du corps d'insertion (18) par pliage, refoulement, rabattage ou emboîtement d'au moins une paroi extérieure (42) du corps d'insertion (18) et/ou en ce qu'en position rentrée et déployée, le corps d'insertion (18) peut se placer par l'extérieur sur l'élément de base du toit (12) et se fixer de manière amovible sur celui-ci.

14. Système de coffre de toit selon la revendication 12 ou 13,
**caractérisé**
**en ce que** à l'élément de base du toit (12) et/ou au corps d'insertion (18) sont conçus des moyens de fixation, à l'aide desquels le corps d'insertion (18) placé à l'élément de base du toit (12) peut se fixer de manière amovible et/ou en ce que dans la position placée sur l'élément de base du toit, aucun espace libre n'est sensiblement présent entre le corps d'insertion (18) et l'élément de base du toit (12).

15. Corps d'insertion, destiné à un système de coffre de toit selon l'une quelconque des revendications 12 à 14,
**caractérisé**
**en ce que** le corps d'insertion (18) comporte un espace intérieur et en ce que le corps d'insertion (18) comporte des moyens variateurs de volume, le volume de l'espace intérieur étant variable à l'aide des moyens variateurs de volume, le corps d'insertion (18) étant déplaçable à l'aide des moyens variateurs de volume entre une position déployée, dans laquelle l'espace intérieur présente un volume maximal et une position rentrée, dans laquelle l'espace intérieur présente un volume minimal, le corps d'insertion (18) comportant un moyen de déplacement, le moyen de déplacement étant conçu sous la forme de roulettes ou de patins, le moyen de déplacement étant conçu en étant escamotable et/ou rabattable dans le corps principal du corps d'insertion (18), de telle sorte que le moyen de déplacement escamoté ou rabattu ne déborde pas du corps principal du corps d'insertion (18), de préférence le corps d'insertion (18), lequel est conçu notamment sous la forme d'un trolley comportant un moyen de transport conçu notamment sous la forme d'un moyen de traction, d'un moyen de poussée ou d'un moyen de support, le moyen de transport étant conçu de préférence sous la forme d'un étrier de traction escamotable.
